(19) Europäisches Patentamt / European Patent Office / Office européen des brevets

(11) EP 3 751 656 A1

(12) EUROPEAN PATENT APPLICATION
published in accordance with Art. 153(4) EPC

(43) Date of publication:
16.12.2020 Bulletin 2020/51

(51) Int Cl.:
H01M 8/18 (2006.01)    H01M 8/0263 (2016.01)
H01M 8/0273 (2016.01)

(21) Application number: 18773921.4

(22) Date of filing: 05.02.2018

(86) International application number:
PCT/JP2018/003736

(87) International publication number:
WO 2019/150570 (08.08.2019 Gazette 2019/32)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD TN

(71) Applicant: SUMITOMO ELECTRIC INDUSTRIES, LTD.
Osaka-shi, Osaka 541-0041 (JP)

(72) Inventors:
• ITO, Takefumi
Osaka-shi
Osaka 5410041 (JP)
• KUWABARA, Masahiro
Osaka-shi
Osaka 5410041 (JP)

(74) Representative: Boult Wade Tennant LLP
Salisbury Square House
8 Salisbury Square
London EC4Y 8AP (GB)

(54) **CELL FRAME, BATTERY CELL, CELL STACK, AND REDOX FLOW BATTERY**

(57) A cell frame includes a bipolar plate and a frame body provided on an outer periphery of the bipolar plate. The bipolar plate includes, in a surface thereof, a groove portion through which an electrolyte supplied from an outside of the cell frame flows. The groove portion includes a liquid-holding portion that holds the electrolyte when the supply of the electrolyte from the outside is stopped. The frame body has an opening having a planar area of 250 cm$^2$ or more. A total volume of a volume of a recess formed by the bipolar plate and an inner wall of the frame body and a total volume of the liquid-holding portion is 5 cm$^3$ or more.

FIG. 1

EP 3 751 656 A1

**Description**

Technical Field

The present invention relates to a cell frame, a battery cell, a cell stack, and a redox flow battery.

Background Art

One of storage batteries is a redox flow battery (hereinafter, may be referred to as an "RF battery") in which battery reactions are performed by supplying electrolytes to electrodes. The RF battery includes, as a main component, a battery cell including a positive electrode to which a positive electrolyte is supplied, a negative electrode to which a negative electrolyte is supplied, and a membrane disposed between the two electrodes. The battery cell is typically formed by using a cell frame including a bipolar plate and a frame body provided on an outer periphery of the bipolar plate (for example, PTL 1). The cell frame has recesses formed by a front surface and a back surface of the bipolar plate, the front and back surfaces each functioning as a bottom surface, and the inner wall of the frame body, the inner wall functioning as a peripheral wall, and the recesses function as spaces in which electrodes are placed. During the operation of the RF battery, an electrolyte of each of the electrodes is supplied from a tank for the corresponding electrode to the corresponding electrode by using a pump.

Citation List

Patent Literature

PTL 1: Japanese Unexamined Patent Application Publication No. 2015-122230

Summary of Invention

A cell frame according to the present disclosure is
a cell frame including a bipolar plate and a frame body provided on an outer periphery of the bipolar plate,
in which the bipolar plate includes, in a surface thereof, a groove portion through which an electrolyte supplied from an outside of the cell frame flows,
the groove portion includes a liquid-holding portion that holds the electrolyte when the supply of the electrolyte from the outside is stopped,
the frame body has an opening having a planar area of 250 cm$^2$ or more, and
a total volume of a volume of a recess formed by the bipolar plate and an inner wall of the frame body and a total volume of the liquid-holding portion is 5 cm$^3$ or more.
A battery cell according to the present disclosure is
a battery cell including an electrode and a cell frame that includes a bipolar plate on which the electrode is disposed and a frame body provided on an outer periphery of the bipolar plate,
in which the bipolar plate includes, in a surface thereof, a groove portion through which an electrolyte supplied from an outside of the battery cell flows,
the groove portion includes a liquid-holding portion that holds the electrolyte when the supply of the electrolyte from the outside is stopped,
the electrode has a planar area of 250 cm$^2$ or more, and
a total volume of a volume of the electrode and a total volume of the liquid-holding portion is 5 cm$^3$ or more.
A cell stack according to the present disclosure includes
a plurality of battery cells, in which each of the battery cells is the battery cell according to the present disclosure.
A redox flow battery according to the present disclosure includes
the battery cell according to the present disclosure or the cell stack according to the present disclosure.

Brief Description of Drawings

[Fig. 1] Figure 1 is a schematic plan view illustrating a cell frame of Embodiment 1.

[Fig. 2] Figure 2 includes schematic plan views each illustrating a bipolar plate included in a cell frame of Embodiment 1.

[Fig. 3] Figure 3 includes an exploded perspective view illustrating a battery cell of Embodiment 1 that includes a cell frame of Embodiment 1, and a schematic perspective view illustrating a cell stack of Embodiment 1.

[Fig. 4] Figure 4 is a schematic structural diagram illustrating an example of a redox flow battery of Embodiment 1.

[Fig. 5] Figure 5 includes schematic plan views each illustrating a bipolar plate included in a cell frame of Embodiment 2.

[Fig. 6] Figure 6 includes schematic plan views each illustrating a bipolar plate included in a cell frame of Embodiment 3.

[Fig. 7] Figure 7 includes schematic plan views each illustrating a bipolar plate included in a cell frame of Embodiment 4.

[Fig. 8] Figure 8 includes schematic plan views each illustrating a bipolar plate included in a cell frame of Embodiment 5.

[Fig. 9] Figure 9 includes schematic plan views each illustrating a bipolar plate included in a cell frame of Embodiment 6.

[Fig. 10] Figure 10 includes schematic plan views each illustrating a bipolar plate included in a cell frame of Embodiment 7.

[Fig. 11] Figure 11 includes schematic plan views each illustrating a bipolar plate included in a cell frame of Embodiment 8.

[Fig. 12] Figure 12 includes schematic plan views each illustrating a bipolar plate included in a cell frame of Embodiment 9.

[Fig. 13] Figure 13 includes schematic plan views each illustrating a bipolar plate included in a cell frame of Embodiment 10.

Description of Embodiments

[Technical Problem]

It is desired that even if power failure occurs in a power system that supplies the pumps with power, the redox flow battery (RF battery) can start the pumps.
During power failure in the power system, the supply of power to the pumps is stopped. Thus, the electrolytes cannot be supplied from the tanks to the RF battery by the pumps, and the RF battery cannot be practically operated. For example, it is conceivable that the pumps are started by providing an uninterruptible power supply. However, it is desired that the pumps can be started by using power of the RF battery without providing an uninterruptible power supply or the like.
In view of this, an object is to provide a cell frame that can construct a redox flow battery capable of starting pumps during power failure in a power system. Another object is to provide a battery cell and a cell stack that can construct a redox flow battery capable of starting pumps during power failure in a power system and a redox flow battery capable of starting pumps during power failure in a power system.

[Advantageous Effects of the Present Disclosure]

The cell frame of the present disclosure, the battery cell of the present disclosure, and the cell stack of the present disclosure can construct a redox flow battery capable of starting pumps during power failure in a power system. The redox flow battery of the present disclosure can start pumps during power failure in a power system.

[Description of Embodiments of the Present Invention]

First, embodiments of the present invention will be listed and described.

(1) A cell frame according to an embodiment of the present invention is

a cell frame including a bipolar plate and a frame body provided on an outer periphery of the bipolar plate,
in which the bipolar plate includes, in a surface thereof, a groove portion through which an electrolyte supplied from an outside of the cell frame flows,
the groove portion includes a liquid-holding portion that holds the electrolyte when the supply of the electrolyte from the outside is stopped,
the frame body has an opening having a planar area of 250 $cm^2$ or more, and
a total volume of a volume of a recess formed by the bipolar plate and an inner wall of the frame body and a total volume of the liquid-holding portion is 5 $cm^3$ or more.

The RF battery including the cell frame described above can hold an electrolyte in the liquid-holding portion of the bipolar plate included in the cell frame and the recess in a state where the supply of the electrolyte from the outside is stopped. In particular, the recess can more reliably hold the electrolyte because the recess contains therein an electrode, which typically has spaces between fibers of carbon felt or the like and thus easily holds the electrolyte. The amount of electrolyte held is an amount corresponding to a total volume of the total volume of the liquid-holding portion provided in a surface of the bipolar plate and the volume of the recess and is 5 $cm^3$ or more in terms of quantity. In the presence of 5 $cm^3$ or more of the electrolyte, the RF battery can discharge the power necessary for starting a pump by using this electrolyte and start the pump during power failure in a power system. Once the pump can be started, the electrolyte stored in a tank can be successively fed to the RF battery. As a result, the RF battery can continue the discharge operation and supply the power to a load such as a power system.

In particular, since the cell frame includes the frame body having an opening with a planar area of 250 $cm^2$ or more, an electrode that can be placed in the recess can have a planar area of 250 $cm^2$ or more. An RF battery that includes an electrode having such a large planar area can function as a high-output battery and more reliably hold an electrolyte.

Accordingly, the cell frame described above can construct an RF battery capable of staring a pump during power failure in a power system. The cell frame can construct a high-output RF battery and is expected to be used during power failure in a power system.

(2) An example of the cell frame includes

an embodiment in which a ratio of the total volume of the liquid-holding portion to the total volume of the volume of the recess and the total volume of the liquid-holding portion is 5% or more.

In the above embodiment, regarding the amount of electrolyte held in the recess and the liquid-holding portion, the ratio of the liquid-holding portion is high to some extent, and thus the electrolyte is more easily held. This is because it is believed that the electrolyte held in the recess falls out, and the electrolyte held in the liquid-holding portion subsequently falls out. Accordingly, in the embodiment, an RF battery capable of starting a pump during power failure in a power system can be more reliably constructed.

(3) A battery cell according to an embodiment of the present invention includes

the cell frame according to (1) or (2) above.

The above battery cell can held an electrolyte in an amount of 5 $cm^3$ or more by the cell frame and an electrode placed in the recess in a state where the supply of an electrolyte from the outside is stopped, as described above. Furthermore, since the battery cell includes the cell frame described above, the battery cell can include a large electrode having a planar area of 250 $cm^2$ or more, as described above. Accordingly, the above battery cell can construct an RF battery capable of starting a pump during power failure in a power system. The battery call can construct a high-output RF battery and is expected to be used during power failure in a power system.

(4) A battery cell according to another embodiment of the present invention is

a battery cell including an electrode and a cell frame that includes a bipolar plate on which the electrode is disposed and a frame body provided on an outer periphery of the bipolar plate,
in which the bipolar plate includes, in a surface thereof, a groove portion through which an electrolyte supplied from an outside of the battery cell flows,
the groove portion includes a liquid-holding portion that holds the electrolyte when the supply of the electrolyte from the outside is stopped,
the electrode has a planar area of 250 $cm^2$ or more, and
a total volume of a volume of the electrode and a total volume of the liquid-holding portion is 5 $cm^3$ or more.

An RF battery including the battery cell described above can hold an electrolyte in the liquid-holding portion of the bipolar plate and the electrode in a state where the supply of the electrolyte from the outside is stopped. The battery cell includes a large electrode having a planar area of 250 $cm^2$ or more, and this configuration also enables an electrolyte to be more reliably held. The amount of electrolyte held is an amount corresponding to a total volume of the total volume of the liquid-holding portion provided in a surface of the bipolar plate and the volume of the electrode and is 5 $cm^3$ or more in terms of quantity. As described above, in the presence of 5 $cm^3$ or more of the electrolyte, the RF battery can start a pump during power failure in a power system and further continue the discharge operation. Accordingly, the batter cell described above can construct an RF battery capable of staring a pump during power failure in a power system. Since the battery cell includes an electrode having a large planar area as described above, the battery cell can construct a high-output RF battery and is expected to be used during power failure in a power system.

(5) An example of the battery cell includes
an embodiment in which a ratio of the total volume of the liquid-holding portion to the total volume of the volume of the electrode and the total volume of the liquid-holding portion is 5% or more.
In the above embodiment, regarding the amount of electrolyte held in the electrode and the liquid-holding portion, the ratio of the liquid-holding portion is high to some extent, and thus the electrolyte is more easily held. This is because it is believed that the electrolyte held in the electrode falls out, and the electrolyte held in the liquid-holding portion subsequently falls out. Accordingly, in the embodiment, an RF battery capable of starting a pump during power failure in a power system can be more reliably constructed.

(6) An example of the battery cell includes

an embodiment in which the groove portion includes a portion where introduction grooves and discharge grooves are alternately arranged, the introduction grooves being grooves through which an electrolyte is introduced, the discharge grooves being grooves which do not communicate with the introduction grooves and are independent of the introduction grooves and through which the electrolyte is discharged, and

the liquid-holding portion includes at least part of the discharge grooves.

In the above embodiment, as described below, each of the discharge grooves has a groove end located at a lower position in the gravitational direction and having a closed portion, and thus can satisfactorily function as a liquid-holding portion. Accordingly, in the above embodiment, an RF battery capable of starting a pump during power failure in a power system can be constructed. In the above embodiment, since the introduction grooves and the discharge grooves are alternately arranged, it is possible to uniformly and efficiently supply an unreacted electrolyte from the introduction grooves to the electrode disposed on the bipolar plate and discharge, from the electrode, the reacted electrolyte used in a battery reaction in the electrode.

(7) A cell stack according to an embodiment of the present invention includes
a plurality of battery cells, in which each of the battery cells is the battery cell according to any one of (3) to (6) above.
An RF battery including the above cell stack includes a plurality of battery cells, in which each of the battery cells is the above-described battery cell capable of holding an electrolyte in an amount of 5 $cm^3$ or more in a state where the supply of the electrolyte from the outside is stopped, as described above. The amount of electrolyte held corresponds to an amount represented by the product of the amount of electrolyte held in a single battery cell and the number of cells and can be further increased. Thus, the cell stack can more reliably output the power necessary for staring a pump. Accordingly, the cell stack can construct an RF battery capable of starting a pump more reliably during power failure in a power system. Since the cell stack includes a plurality of battery cells, the cell stack can construct a high-output RF battery and is expected to be used during power failure in a power system. When the cell stack includes the electrode having a planar area of 250 $cm^2$ or more, a higher-output battery can be constructed.

(8) A redox flow battery according to an embodiment of the present invention includes
the battery cell according to any one of (3) to (6) above or the cell stack according to (7) above.

The above RF battery includes the battery cell capable of holding an electrolyte in an amount of 5 $cm^3$ or more in a state where the supply of an electrolyte from the outside is stopped, as described above, or the cell stack. Accordingly, the RF battery can start a pump during power failure in a power system. When the RF battery includes the above-described electrode having a large planar area or the above-described cell stack, or satisfies these two conditions, the RF battery can be a high-output battery and is expected to be used during power failure in a power system.

[Details of Embodiments of the Present Invention]

Hereinafter, embodiments of the present invention will be specifically described with reference to the drawings. The same reference signs in the drawings denote the same parts.

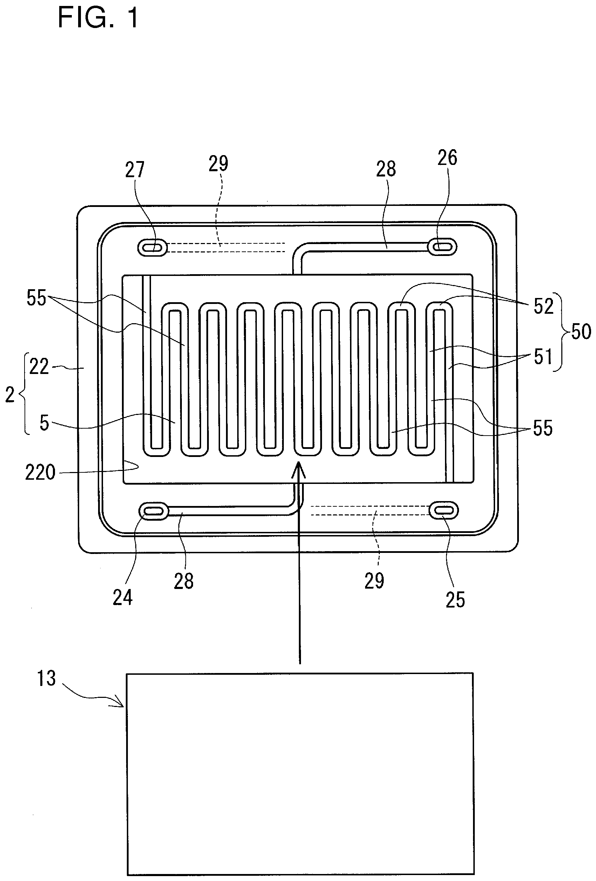

In Figs. 1 to 3 and Figs. 5 to 13, groove portions 50 provided in bipolar plates 5 and 5A to 5I are illustrated in an emphasized manner for easier understanding, and the dimensions of the groove portions 50 may be different from actual dimensions.

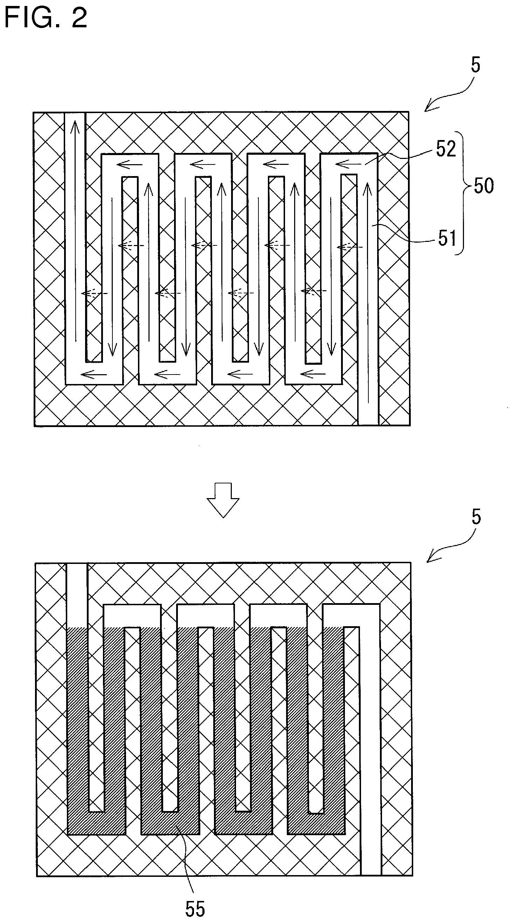

Figure 2 and Figs. 5 to 13 illustrate only liquid flow regions (the details thereof will be described later) in the bipolar plates 5 and 5A to 5I, respectively. In each of Figs. 2 and Figs. 5 to 13, a lower end edge of the liquid flow region is a supply edge, and an upper end edge of the liquid flow region is a discharge edge (the same as the above).

The upper drawings of Fig. 2 and Figs. 5 to 13 are each a plan view of the liquid flow region. In the drawings, ridge portions are indicated by cross-hatching so that the groove portions 50 are easily understood. The solid-line arrows shown in the groove portions 50 imaginarily show a flow of an electrolyte along the groove portions 50, and the broken-line arrows imaginarily show a flow of the electrolyte from the bipolar plates 5 and 5A to 5I through an electrode 13 (Fig. 1, etc.).

The lower drawings of Fig. 2 and Figs. 5 to 13 are each an explanatory view illustrating a state where an electrolyte is held when the supply of the electrolyte from the outside is stopped. In the drawings, a portion (liquid-holding portion 55) where the electrolyte is held is indicated by hatching.

[Embodiment 1]

A cell frame 2, a battery cell 10, a cell stack 3, and an RF battery 1 of Embodiment 1 will be sequentially described with reference to Figs. 1 to 4.

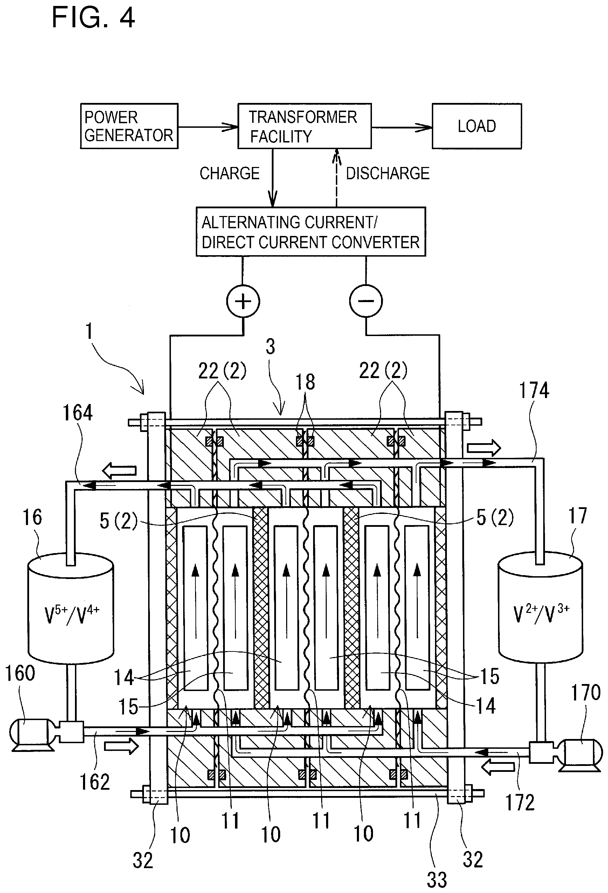

In Fig. 4, ions shown in a positive electrolyte tank 16 and a negative electrolyte tank 17 are examples of ion species contained in respective electrolytes for electrodes.

<Cell frame>

«Overview»

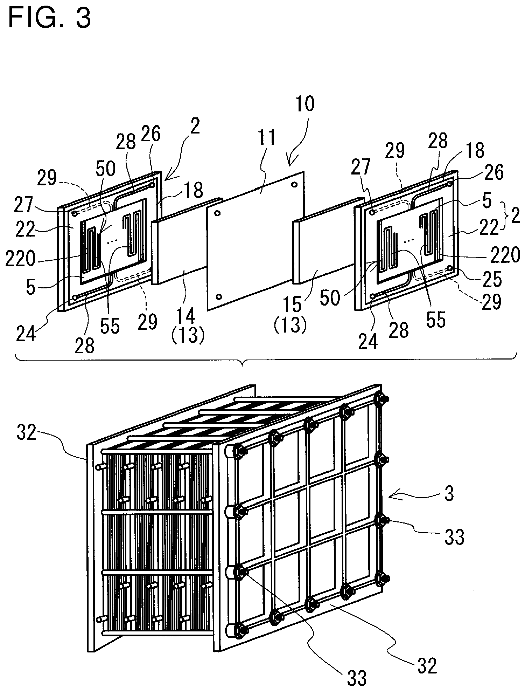

The cell frame 2 of Embodiment 1 is typically used as a component of the RF battery 1 (Fig. 4) and includes a bipolar plate 5 and a frame body 22 provided on an outer periphery of the bipolar plate 5, as illustrated in Fig. 1. A recess formed by the bipolar plate 5 and an inner wall 220 of the frame body 22, more specifically, a recess (also refer to Fig. 3) formed by a surface of the bipolar plate 5, the surface functioning as a bottom surface, and the inner wall 220 functioning as a peripheral wall is used as a space in which an electrode 13 of the RF battery 1 is placed and a space through which an electrolyte supplied from the outside of the RF battery 1 flows.

The cell frame 2 of Embodiment 1 includes, in a surface of the bipolar plate 5, a groove portion 50 through which an electrolyte supplied from the outside of the cell frame 2 flows. The groove portion 50 includes a liquid-holding portion 55 that holds the electrolyte when the supply of the electrolyte from the outside of the cell frame 2 is stopped. Furthermore, in the cell frame 2 of Embodiment 1, a total volume Va of a volume Vf of the recess described above and a total volume Vs of the liquid-holding portion 55 is 5 cm$^3$ or more.

«Bipolar plate»

The bipolar plate 5 is an electrically conductive plate-like member that conducts an electric current but does not allow electrolytes to flow therethrough and is used for electron transfer between the bipolar plate 5 and the electrode 13 disposed on the bipolar plate 5.

In this example, an opening of the frame body 22 has a rectangular shape. Accordingly, in the bipolar plate 5, a region exposed from the opening of the frame body 22 (hereinafter, this region may be referred to as a "liquid flow region") has a rectangular planar shape. A lower end edge of this rectangular liquid flow region is defined as a supply edge disposed on a side on which an electrolyte is supplied. An upper end edge of the rectangular liquid flow region is defined as a discharge edge disposed on a side on which the electrolyte is discharged to the outside of the bipolar plate 5. Herein, a description will be made of a case where an electrolyte is supplied from the supply edge of the liquid flow region of the bipolar plate 5 toward the discharge edge, that is, a case where an electrolyte is supplied from the lower side toward the upper side in Fig. 1. Hereinafter, the up-down direction of Figs. 1 to 4 and Figs. 5 to 13, which will be described later, may be referred to as a "direction in which an electrolyte flows" or a "vertical direction". The left-right direction of each of the drawings may be referred to as a "direction orthogonal to the direction in which an electrolyte flows" or a "horizontal direction".

<Groove portion>

A groove portion 50 is provided in the liquid flow region of the bipolar plate 5.

The groove portion 50 functions as a flow channel of an electrolyte. In the bipolar plate 5, a peripheral region supported by the frame body 22 (the region that is hidden by the frame body 22 and is not seen in Figs. 1 and 3) does not necessarily include the groove portion 50 but may include the groove portion 50.

The shape, the dimensions (such as a groove length, a groove width, a groove depth, and a gap between adjacent grooves), the number, the position of formation, and the like of the groove portion 50 can be appropriately selected within ranges that satisfy the total volume Va described above. Herein, the length refers to a dimension in the direction in which an electrolyte flows, and the width refers to a dimension in a direction orthogonal to the direction in which an electrolyte flows. Herein, the groove depth refers to a dimension in a thickness direction of the bipolar plate 5.

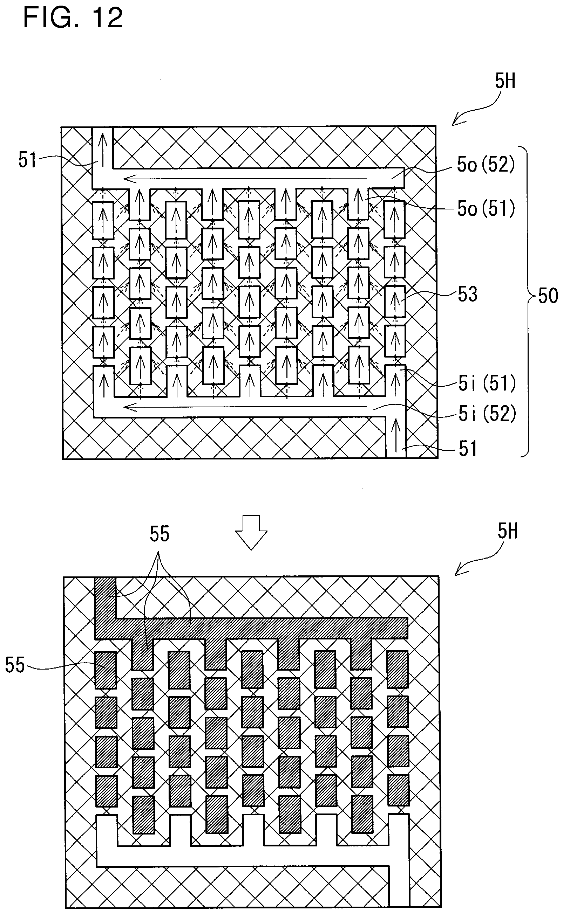

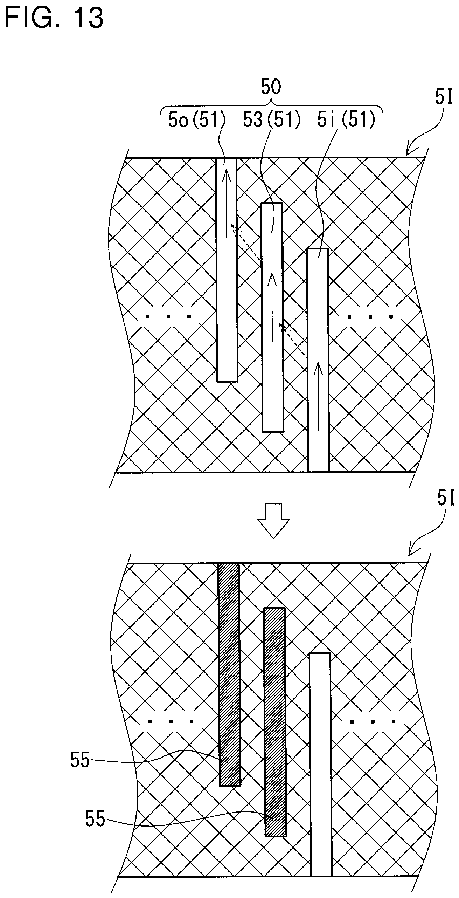

The groove portion 50 may include a groove that is opened to the periphery of the liquid flow region of the bipolar plate 5 (for example, a vertical groove 51 described later), include a groove that is not opened to the periphery (for example, an isolated groove 53 in Figs. 12 and 13), or include these two types of grooves (for example, Figs. 12 and 13).

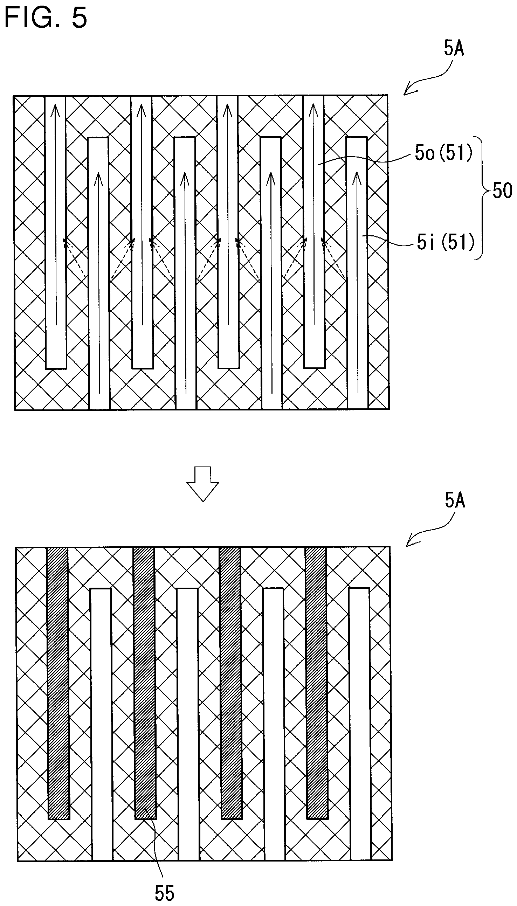

The groove portion 50 may include a single continuous groove as described in this example. Alternatively, the groove portion 50 may include a plurality of independent grooves (for example, Figs. 5 to 13). In each of the cases, for example, when the groove portion 50 includes a groove group in which linear grooves extending in a single direction (for example, vertical grooves 51 or horizontal grooves 52 described later) are arranged in parallel at predetermined intervals, a good flowability of an electrolyte can be achieved. When the groove portion 50 includes the groove group, ridge portions that separate adjacent grooves from each other can be formed. The ridge portions function as regions that come in contact with an electrode 13 and can be used as regions for electron transfer between the bipolar plate 5 and the electrode 13.

The groove portion 50 of this example includes a meandering groove which is a single continuous groove opened to the periphery of the liquid flow region of the bipolar plate 5 and which meanders over substantially the entire rectangular liquid flow region. The meandering groove includes vertical grooves 51 that extend linearly in a direction in which an electrolyte flows and horizontal grooves 52 that extend in a direction orthogonal to the direction in which the electrolyte flows. More specifically, a plurality of vertical grooves 51 each extending from a position near the supply edge to a position near the discharge edge are arranged in parallel at intervals in the horizontal direction, and vertical grooves 51 located on the right end and the left end in the horizontal direction are opened to the supply edge and the discharge edge, respectively. The horizontal grooves 52 are arranged so as to connect the upper ends of adjacent vertical grooves 51 together and to connect the lower ends of adjacent vertical grooves 51 together. The amplitude direction of the meandering groove including the vertical grooves 51 and the horizontal grooves 52 is the vertical direction. Two adjacent vertical grooves 51 and a horizontal groove 52 that connects the lower ends of the vertical grooves 51 to each other, the vertical grooves 51 and the horizontal groove 52 forming the meandering groove, are arranged to form a U shape. The gaps between adjacent vertical grooves 51 are substantially equal to each other. The vertical grooves 51 have the same shape (a rectangular planar shape and a rectangular sectional shape) and the same dimensions (groove length, groove width, and groove depth). The horizontal grooves 52 also have the same shape and the same dimensions.

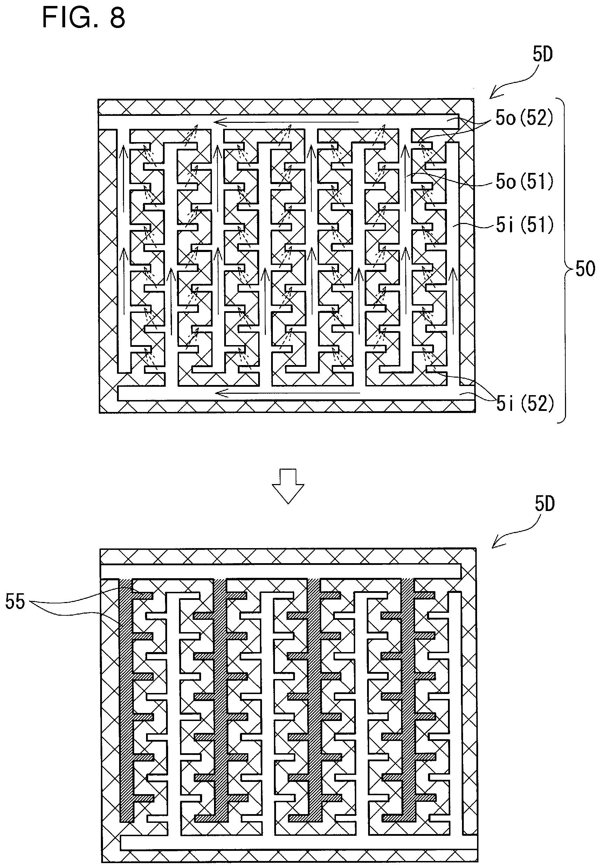

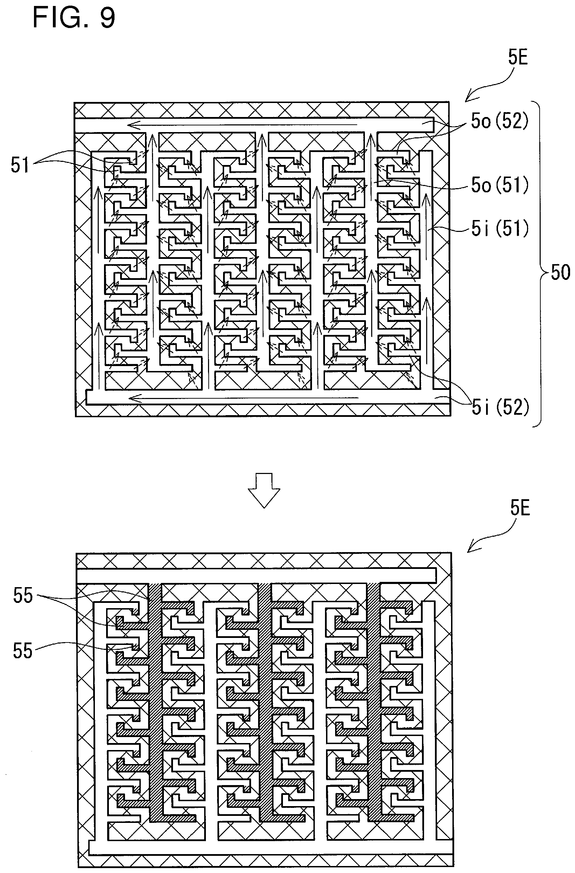

Here, as an example, a description is made of a meandering groove that includes the vertical grooves 51 parallel to a direction in which an electrolyte flows and the horizontal grooves 52 orthogonal to the direction. Alternatively, the meandering groove may include grooves that intersect one another so as to be non-orthogonal to a direction in which an electrolyte flows. For example, the meandering groove may be a wavy or zigzag meandering groove. The openings may be provided on side edges connecting the supply edge and the discharge edge, as illustrated in Figs. 8 and 9 as examples, instead of the supply edge or the discharge edge.

<Liquid-holding portion>

The groove portion 50 includes a liquid-holding portion 55 in at least part thereof.

The term "liquid-holding portion 55" refers to, in the groove portion 50, a portion from which an electrolyte does not fall out from a cell frame 2 by its own weight in a state where the supply of the electrolyte to an RF battery 1 including the cell frame 2 is stopped, or a portion which can hold the electrolyte at least within a short time (hereinafter, this time is referred to as a "complete stop time"), for example 5 minutes or less, from the stop of the supply, though the electrolyte may fall out after a long time passes. In a groove having an opening on the discharge edge of the liquid flow region of the bipolar plate 5 as in this example, the liquid-holding portion 55 may include a portion which is disposed closer to the supply edge than to the opening and whose end located at a lower position in the gravitational direction is closed. Alternatively, the liquid-holding portion 55 may include a groove (for example, an isolated groove 53) that is not opened to the periphery of the liquid flow region of the bipolar plate 5.

In the description below, the term "amount of electrolyte held" refers to an amount that can be held during the complete stop time, and the expression that "a groove portion 50, a recess, or an electrode 13 holds an electrolyte" means that the electrolyte is held during the complete stop time.

The liquid-holding portion 55 of this example includes, in the groove portion 50, the above-described portions (four portions in Fig. 2) each of which is arranged to form a U shape. The portion arranged to form a U shape has a shape in which a lower portion in the gravitational direction is closed. This U-shaped portion is a portion from which an electrolyte is unlikely to fall out. Since the liquid-holding portion 55 includes such a portion from which an electrolyte is unlikely to fall out, the liquid-holding portion 55 more easily holds the electrolyte when the supply of the electrolyte from the outside is stopped.

The total volume Vs of the liquid-holding portion 55 can be appropriately selected within a range in which the total volume Va of the volume Vf of the recess and the total volume Vs of the liquid-holding portion 55 satisfies 5 cm$^3$ or more. The groove shape, the groove length, the groove width, the groove depth, and the like are adjusted such that the total volume Vs satisfies a predetermined size, though they depend on the dimensions (planar area of liquid flow region = planar area Sf of opening, the thickness, etc.) of the bipolar plate 5. When the groove portion 50 includes a plurality of liquid-holding portions 55 as in this example, the volume of each of the liquid-holding portions 55, the number of liquid-holding portions 55, etc. are adjusted such that the total volume Vs satisfies a predetermined size. When the groove portion 50 includes a plurality of liquid-holding portions 55, the specifications of, for example, the shape and the dimensions (such as the groove length, the groove width, the grooved depth, and the volume) of the liquid-holding portions 55 may be the same as in this example or may be varied. Furthermore, with an increase in the ratio of the liquid-holding portion 55 in the groove portion 50, a larger amount of electrolyte held can be ensured. For example, the ratio of the total planar area of the liquid-holding portion 55 may be 45% or more, and furthermore, 55% or more relative to the total planar area of the groove portion 50.

Examples of the material constituting the bipolar plate 5 include organic composite materials containing a conductive material such as a carbon material or a metal and an organic material such as a thermoplastic resin, so-called conductive plastics. The bipolar plate 5 can be produced by forming into a plate, and forming a groove portion 50 by, for example, a known method. Examples of the method for forming a conductive plastic include injection molding, press molding, and vacuum molding. A flat plate material may be subjected to cutting work or the like to form the groove portion 50.

«Frame body»

The frame body 22 supports the bipolar plate 5, exposes the liquid flow region of the bipolar plate 5 from an opening, and forms a recess by the liquid flow region and an inner wall 220. The frame body 22 is used for supplying an electrolyte to an electrode 13 placed in the recess and for discharging the electrolyte from the electrode 13. Therefore, the frame body 22 includes a supply passage and a discharge passage of an electrolyte. The supply passage includes a liquid supply manifold (24 in a positive electrode and 25 in a negative electrode). The discharge passage includes a liquid discharge manifold (26 in a positive electrode and 27 in a negative electrode). The supply passage and the discharge passage each include a slit (28 in a positive electrode and 29 in a negative electrode) that connects each manifold and the opening (window portion). In plan view of the cell frame 2 as illustrated in Fig. 1, the frame body 22 is provided such that an opening of each of the slits 28 and 29 substantially coincides with the supply edge or the discharge edge of the liquid flow region of the bipolar plate 5.

Furthermore, the frame body 22 may include a rectifying groove (not shown) extending along an inner periphery of the opening. This rectifying groove is provided along the supply edge or the discharge edge of the bipolar plate 5. Therefore, when the frame body 22 includes the rectifying groove, an electrolyte is easily uniformly introduced into or discharged from the bipolar plate 5 and the electrode 13 in the horizontal direction. In the case where the frame body 22 includes the rectifying groove, the slits 28 and 29 are opened to the rectifying groove.

The frame body 22 of this example is a frame having a rectangular opening and a rectangular outer shape as described above. However, the shape of the opening and the outer shape may be changed as required. As illustrated in Fig. 1, the shape of the opening and the outer shape may be shapes that resemble each other (rectangles having different ratios of the long side to the short side). Alternatively, the shape of the opening and the outer shape may be, for example, similar shapes or completely different shapes such as a combination of a circle and a rectangle.

The planar area Sf of the opening of the frame body 22 is 250 cm$^2$ or more. When the planar area Sf is 250 cm$^2$ or more, a large volume Vf of the recess is easily ensured, and the amount of electrolyte held in the recess can be increased. In this case, a planar area Se of the electrode 13 that can be placed in the recess can be made 250 cm$^2$ or more. When a large electrode 13 can be placed in the recess, an electrolyte is easily held by the large electrode 13. Furthermore, a high-output battery can be constructed in this case. With an increase in the planar area Sf, a larger volume Vf, a larger size of the electrode 13, and a higher output can be realized. The planar area Sf may be 300 cm$^2$ or more, further 800 cm$^2$ or more, and further 2,000 cm$^2$ or more. Considering, for example, rigidity and strength of the frame body 22 and assembly workability of the RF battery 1, the planar area Sf may be 5,000 cm$^2$ or less.

A dimension in the inner wall 220 of the frame body 22 in the thickness direction of the frame body 22 is defined as a height. Typically, the height of the inner wall 220 may be substantially equal to the maximum thickness of the electrode 13 that can be placed in the recess. Together with the planar area Sf of the opening, the height is a parameter relating to the volume Vf of the recess. Accordingly, the height is preferably adjusted in accordance with the thickness of the electrode 13, the volume Vf, and the area Sf within a range in which the total volume Va satisfies 5 cm$^3$ or more. With an increase in the height, even when the planar area Sf is small to some extent, the volume Vf of the recess is more easily increased, and the amount of electrolyte held in the recess can be increased. From this point of view, the height may be 0.05 mm or more. In the case of a small height, the thickness of the cell frame 2 is easily reduced, and thus a reduction in the thickness and a reduction in the size can be easily realized in the construction of a multi-cell battery including a plurality of battery cells 10 (Fig. 4). From this point of view, the height may be 8 mm or less. Note that even when the height is small, the volume Vf of the recess is easily increased as long as the planar area Sf is large to some extent.

When the volume Vf of the recess is, for example, 15 cm$^3$ or more, an electrolyte can be held in the recess in a large amount. When the volume Vf is, for example, 250 cm$^3$ or less, it is easy to suppress a decrease in rigidity and strength of the frame body 22 and a decrease in assembly workability of the RF battery 1 and the like due to an excessively large planar area Sf of the opening of the frame body 22, or an increase in the size due to an excessively large height of the inner wall 220 of the frame body 22.

Examples of the material constituting the frame body 22 include resins having good resistance to electrolytes and good electrical insulating properties. In an embodiment, the frame body 22 may include, for example, a pair of frame body pieces that are divided in the thickness direction of the frame body 22, and the peripheral region of the bipolar plate 5 may be sandwiched between the frame body pieces from the front and the back of the bipolar plate 5 to support the bipolar plate 5. The pair of frame body pieces with the bipolar plate 5 therebetween may be joined as required.

«Total volume of liquid-holding portion and recess»

In the cell frame 2 of Embodiment 1, the total volume Va of the volume Vf of the recess and the total volume Vs of the liquid-holding portion 55 is 5 cm$^3$ or more. With an increase in the total volume Va, the amount of electrolyte held in the recess and the liquid-holding portion 55 can be increased, and the power necessary for starting pumps 160 and 170 (Fig. 4) can be more reliably generated. From this point of view, the total volume Va may be 10 cm$^3$ or more. At a total volume Va of 100 cm$^3$ or more, the power for starting the pumps 160 and 170 can be more reliably generated even in the case where the RF battery 1 is a multi-cell battery or a high-output battery including large electrodes 13. The total volume Vs of the liquid-holding portion 55 and the volume Vf of the recess (the planar area Sf of the opening of the frame body 22 and the height of the inner wall 220) are preferably adjusted such that the total volume Va is a desired value. An excessively large total volume Va results in, for example, a decrease in assembly workability due to an increase in the size of the components of the RF battery 1. Accordingly, the total volume Va may be, for example, 1,000 cm$^3$ or less in consideration of assembly workability and the like.

A ratio ((Vs/Va) $\times$ 100) of the total volume Vs of the liquid-holding portion 55 to the total volume Va of the volume Vf of the recess and the total volume Vs of the liquid-holding portion 55 may be 5% or more. When an electrolyte is held in the recess and the liquid-holding portion 55, it is considered that the electrolyte first falls out from the recess and then falls out from the liquid-holding portion 55. Therefore, when the above ratio is 5% or more, the volume ratio of the liquid-holding portion 55, which holds an electrolyte more easily than the recess, is high, and thus the electrolyte can be more reliably held.

(Application examples)

The cell frame 2 of Embodiment 1 can be used in any of single-cell batteries, which include a single battery cell 10, and multi-cell batteries.

In the case of the construction of a single-cell battery, two cell frames 2 (hereinafter, may be referred to as "single-sided groove frames") each of which includes, only on one of the front surface and the back surface of a bipolar plate 5, a groove portion 50 including a liquid-holding portion 55 may be prepared, one of the single-sided groove frames may be used for a positive electrode, and the other single-sided groove frame may be used for a negative electrode.

In the case of the construction of a multi-cell battery, a cell frame 2 (hereinafter, may be referred to as a "double-sided groove frame") which includes, on both the front surface and the back surface of a bipolar plate 5, a groove portion 50 including a liquid-holding portion 55 may be prepared, a recess on the one surface side may be used for a positive electrode, and a recess on the other surface side may be used for a negative electrode. In an example of the multi-cell battery, among a plurality of stacked battery cells 10, battery cells 10 disposed at intermediate positions may include the double-sided groove frames and battery cells 10 disposed at the two end positions may include the single-sided groove frames.

<Battery cell>

A battery cell 10 of Embodiment 1 typically functions as a main component of an RF battery 1 and includes an electrode 13 and a cell frame 2, as illustrated in Fig. 3. The cell frame 2 includes a bipolar plate 5 on which an electrode 13 is disposed and a frame body 22 provided on an outer periphery of the bipolar plate 5. The bipolar plate 5 includes, in one surface thereof, a groove portion 50 through which an electrolyte supplied from the outside of the battery cell 10 flows. The groove portion 50 includes a liquid-holding portion 55 that holds the electrolyte when the supply of the electrolyte from the outside of the battery cell 10 is stopped. Furthermore, in the battery cell 10 of Embodiment 1, a total volume Vc of a volume Ve of the electrode 13 and a total volume Vs of the liquid-holding portion 55 is 5 cm$^3$ or more. The cell frame 2 of Embodiment 1 described above can be suitably used as such a cell frame 2 included in the battery cell 10 of Embodiment 1. A typical example of the battery cell 10 of Embodiment 1 is a battery cell 10 including the cell frame 2 of Embodiment 1. In the battery cell 10 including the cell frame 2 of Embodiment 1, the planar area Sf of the opening of the frame body 22 is 250 cm$^2$ or more, and the total volume Vc of the volume Vf of the recess and the total volume Vs of the liquid-holding portion 55 is 5 cm$^3$ or more. Note that, in a single battery cell 10, the total volume Vc on the positive electrode side is 5 cm$^3$ or more, and the total volume Vc on the negative electrode side is 5 cm$^3$ or more. Accordingly, the total volume Vc on the positive electrode side and the negative electrode side in a single battery cell 10 is 10 cm$^3$ or more.

The battery cell 10 includes a positive electrode 14 or a negative electrode 15 as the electrode 13. The battery cell 10 typically includes a positive electrode 14 to which a positive electrolyte is supplied, a negative electrode 15 to which a negative electrolyte is supplied, a membrane 11 disposed between the positive electrode 14 and the negative electrode 15, and a pair of cell frames 2 that further sandwich the positive electrode 14 and the negative electrode 15 that sandwich the membrane 11 (also refer to Fig. 4). Hereinafter, the positive electrode 14 and the negative electrode 15 may be collectively referred to as "electrodes 14 and 15".

The cell frames 2 included in the battery cell 10 of Embodiment 1 may be at least one of the single-sided groove frame and the double-sided groove frame. When the battery cell 10 of Embodiment 1 is a single-cell battery, a pair of single-sided groove frames may be provided. When the battery cell 10 of Embodiment 1 is a multi-cell battery, examples of the form of the battery cell 10 include a form including at least one double-sided groove frame, a form including a pair of single-sided groove frames, and a form in which these forms are combined. In the multi-cell battery, the above combined form is preferable because the amount of electrolyte held can be increased. Of the pair of the single-sided groove frames, one of the single-sided groove frames has a positive electrode 14 in the recess thereof and the other single-sided groove frame has a negative electrode 15 in the recess thereof. A positive electrode 14 is placed in one of recesses of the double-sided groove frame, and a negative electrode 15 is placed in the other recess.

Each of the electrodes 14 and 15 is a reaction site to which an electrolyte containing an active material is supplied and in which the active material (ions) causes a battery reaction. Typical examples of the electrodes include fiber aggregates of a carbon material (such as carbon felt, carbon paper, and carbon cloth). The fiber aggregates are typically hydrophilic and easily hold an electrolyte in spaces, such as gaps between fibers, and thus the electrolyte is unlikely to fall out during the complete stop time. Other known materials may also be used.

The size of each of the electrodes 14 and 15 can be appropriately selected in a range in which the electrodes 14 and 15 can be placed in the recesses of the cell frames 2. In particular, when the electrodes 14 and 15 each have a planar area Se of 250 cm$^2$ or more, the volume Ve of each of the electrodes 14 and 15 is easily increased. Accordingly, electrolytes are easily held more reliably when the supply of the electrolytes from the outside is stopped. Furthermore, with an increase in the planar area Se, a higher-output battery can be constructed. From this point of view, for example, the planar area Se may be 300 cm$^2$ or more, further 800 cm$^2$ or more, and further 2,000 cm$^2$ or more. On the other hand, even when the planar area Se is small to some extent, the volume Ve is easily increased as long as the thickness of each of the electrodes 14 and 15 is large to some extent. Considering, for example, rigidity and strength of the cell frames 2 in which the electrodes 14 and 15 are placed and assembly workability of the RF battery 1, the planar area Se may be 5,000 cm$^2$ or less. Note that when the planar area Se of each of the electrodes 14 and 15 is substantially equal to the planar area Sf of the opening of the frame body 22, the volume Ve is easily increased. When the planar area Se of each of the electrodes 14 and 15 is smaller than the planar area Sf of the opening of the frame body 22, the electrode 13 is easily disposed in the frame body 22.

The thickness of each of the electrodes 14 and 15 can be appropriately selected in a range in which the thickness is equal to or less than the height of the inner wall 220. In this range, the larger the thickness, the more easily the volume Ve of each of the electrodes 14 and 15 is increased, and more reliably and more easily the electrolyte is held when the supply of the electrolytes from the outside is stopped. From this point of view, the thickness may be 0.05 mm or more. In the construction of the RF battery 1, the battery cell 10 is usually compressed in a direction in which the components are stacked. Therefore, even if an electrode whose thickness before construction is larger than the height of the inner wall 220 is used as each of the electrodes 14 and 15, the maximum thickness of each of the electrodes 14 and 15 corresponds to the height of the inner wall 220 in the compressed state (the state in which the RF battery 1 is constructed).

«Total volume of liquid-holding portion and electrode»

In the battery cell 10 of Embodiment 1, the total volume Vc of the volume Ve of the electrode 13 and the total volume Vs of the liquid-holding portion 55 is 5 cm$^3$ or more. With an increase in the total volume Vc, the amount of electrolyte held by the electrode 13 and the liquid-holding portion 55 can be increased, and the power necessary for starting pumps 160 and 170 can be more reliably generated. From this point of view, the total volume Vc may be 10 cm$^3$ or more. At a total volume Vc of 100 cm$^3$ or more, the power for starting the pumps 160 and 170 can be more reliably generated even in the case where the RF battery 1 is a multi-cell battery or a high-output battery including large electrodes 13. The total volume Vs of the liquid-holding portion 55 and the volume Ve (the planar area Se and the thickness) of each of the electrodes 14 and 15 are preferably adjusted such that the total volume Vc is a desired value. An excessively large total volume Vc results in, for example, a decrease in assembly workability due to an increase in the size of the components of the RF battery 1. Accordingly, the total volume Vc may be, for example, 1,000 cm$^3$ or less in consideration of assembly workability and the like.

A ratio ((Vs/Vc) $\times$ 100) of the total volume Vs of the liquid-holding portion 55 to the total volume Vc of the volume Ve of the electrode and the total volume Vs of the liquid-holding portion 55 may be 5% or more. When an electrolyte is held in the electrode 13 and the liquid-holding portion 55, it is considered that the electrolyte first falls out from the electrode 13 and then falls out from the liquid-holding portion 55. Therefore, when the above ratio is 5% or more, the volume ratio of the liquid-holding portion 55, which holds an electrolyte more easily than the electrode 13, is high, and thus the electrolyte can be more reliably held.

The total volume Vc can be a value smaller than the total volume Va of the volume Vf of the recess and the total volume Vs of the liquid-holding portion 55 because the electrode 13 is placed in the recess. However, when the total volume Vc and the total volume Va are substantially equal to each other, the electrode 13 can hold an electrolyte in an amount corresponding to the amount of electrolyte held in the recess as described above, and thus it is expected that the electrolyte is less likely to fall out.

The membrane 11 is a member that separates the positive electrode 14 and the negative electrode 15 from each other and allows specific ions to permeate therethrough. An ion-exchange membrane or the like is used as the membrane 11.

<Cell stack>

The cell stack 3 of Embodiment 1 includes a plurality of battery cells 10 of Embodiment 1 and functions as a main component of the RF battery 1. The cell stack 3 is a layered body in which a plurality of battery cells 10 are stacked to form a multilayer structure as illustrated in Figs. 3 and 4 and is used in a multi-cell battery.

The cell stack 3 typically includes a layered body in which a cell frame 2 (bipolar plate 5), a positive electrode 14, a membrane 11, and a negative electrode 15 are stacked in this order a plurality of times, a pair of end plates 32 that sandwich the layered body, fastening members such as nuts and joining members 33, e.g., long bolts which connect between the end plates 32. When the end plates 32 are fastened by the fastening members, the fastening force in the stacking direction maintains the stacked state of the layered body. As illustrated in Fig. 3 as an example, the cell stack 3 may have a form in which a predetermined number of battery cells 10 form a sub-cell stack, and a plurality of sub-cell stacks are stacked. Sealing members 18 are disposed between adjacent frame bodies 22 (Fig. 4) such that the layered body is maintained in a fluid-tight manner.

The cell stack 3 may include, as the cell frames 2, single-sided groove frames at both ends of the layered body in the stacking direction and double-sided groove frames at intermediate positions of the layered body in the stacking direction. Each of the single-sided groove frames may have a structure in which a current collector plate made of a metal or the like is disposed on a surface of a bipolar plate 5, the surface not having an electrode 13 thereon.

The number of cells in the cell stack 3 can be appropriately selected. The amount of electrolyte held by the recess or the electrode 13 and the liquid-holding portion 55 in the cell stack 3 corresponds to an amount represented by the product of the amount (the total volume Va or the total volume Vc) of electrolyte held in a single battery cell 10 and the number of cells. Therefore, with an increase in the number of cells, the amount of electrolyte held can be increased, and the power necessary for starting the pumps 160 and 170 can be more reliably output. In addition, with an increase in the number of cells, a higher-output battery can be constructed. From this point of view, the number of cells may be, for example, 20 or more, and further 200 or more.

<RF battery>

As illustrated in Fig. 4, the RF battery 1 of Embodiment 1 is connected, through an alternating current/direct current converter, a transformer facility, and the like, to a power generation unit and a load such as a power system or a consumer, performs charging using the power generation unit as a power supply source, and performs discharging to the load as a power supply target. Examples of the power generation unit include solar power generation apparatuses, wind power generation apparatuses, and other general power plants. The RF battery 1 of Embodiment 1 may be a single-cell battery including one battery cell 10 of Embodiment 1, a multi-cell battery including a plurality of battery cells 10 of Embodiment 1, or a multi-cell battery including a cell stack 3 of Embodiment 1. The RF battery 1 further includes a circulation mechanism that circulates and supplies electrolytes to the battery cell 10 or the cell stack 3. The details of the battery cell 10 and the cell stack 3 are as described above. Hereinafter, the circulation mechanism will be described.

«Circulation mechanism»

The circulation mechanism includes a positive electrolyte tank 16, a negative electrolyte tank 17, pipes 162, 164, 172, and 174, and pumps 160 and 170. The positive electrolyte tank 16 stores a positive electrolyte to be circulated and supplied to the positive electrode 14. The negative electrolyte tank 17 stores a negative electrolyte to be circulated and supplied to the negative electrode 15. The pipes 162 and 164 connect between the positive electrolyte tank 16 and the battery cell 10 (cell stack 3). The pipes 172 and 174 connect between the negative electrolyte tank 17 and the battery cell 10 (cell stack 3). The pumps 160 and 170 are provided, respectively, on the pipes 162 and 172 on the supply side to the battery cell 10 (cell stack 3). The pipes 162 and 164 and the pipes 172 and 174 are respectively connected between the liquid supply manifolds 24 and 25 and the liquid discharge manifolds 26 and 27 of the cell frame 2 such that electrolytes can flow therethrough and construct circulation paths of the electrolytes of the electrodes.

Regarding the basic configurations, materials, etc. of the battery cell 10, the cell stack 3, and the RF battery 1, known configurations, materials, etc. can be appropriately referred to. As the electrolytes, an electrolyte containing vanadium ions as positive and negative active materials (PTL 1), an electrolyte containing manganese ions as a positive electrode active material and titanium ions as a negative electrode active material, and other electrolytes having known compositions can be used.

(Main advantageous effects)

The use of the cell frame 2 of Embodiment 1 in the RF battery 1 enables the RF battery 1 to start the pumps 160 and 170 even when the supply of the power to the pumps 160 and 170 is stopped by, for example, power failure in a power system. The reason for this is as follows. The cell frame 2 includes the bipolar plate 5 having the liquid-holding portion 55, and the total volume $Va$ of the total volume $Vs$ of the liquid-holding portion 55 and the volume $Vf$ of the recess satisfies 5 cm$^3$ or more. Therefore, in a state where the supply of electrolytes from the outside is stopped, the amount (5 cm$^3$ or more) of electrolyte capable of generating the power necessary for starting the pumps 160 and 170 can be secured by the recess and the liquid-holding portion 55. In particular, in the cell frame 2 of Embodiment 1, the planar area $Sf$ of the opening of the frame body 22 is 250 cm$^2$ or more, and an electrode 13 having a planar area $Se$ of 250 cm$^2$ or more can be placed in the recess. Accordingly, the RF battery 1 can more reliably hold an electrolyte with the electrode 13. Furthermore, since the cell frame 2 of Embodiment 1 can include an electrode 13 having a planar area $Se$ of 250 cm$^2$ or more in the recess thereof, a high-output battery can be constructed.

The use of the battery cell 10 of Embodiment 1 or the cell stack 3 of Embodiment 1 in the RF battery 1 enables the RF battery 1 to start the pumps 160 and 170 even when the supply of the power to the pumps 160 and 170 is stopped by, for example, power failure in a power system. The reason for this is as follows. The battery cell 10 and the cell stack 3 include the cell frame 2 of Embodiment 1, and the total volume $Va$ satisfies 5 cm$^3$ or more or the total volume $Vc$ of the volume $Ve$ of the electrode 13 and the total volume $Vs$ of the liquid-holding portion 55 satisfies 5 cm$^3$ or more. Therefore, in a state where the supply of electrolytes from the outside is stopped, the amount (5 cm$^3$ or more) of electrolyte capable of generating the power necessary for starting the pumps 160 and 170 can be secured by the liquid-holding portion 55 of the bipolar plate 5 and the recess or the electrode 13. In particular, when the battery cell 10 of Embodiment 1 and the cell stack 3 of Embodiment 1 include an electrode 13 having a planar area $Se$ of 250 cm$^2$ or more, the electrolyte can be more reliably held by the electrode 13, and a high-output battery can be constructed.

The RF battery 1 of Embodiment 1 can start the pumps 160 and 170 even when the supply of the power to the pumps 160 and 170 is stopped by, for example, power failure in a power system. The reason for this is as follows. The RF battery 1 includes the battery cell 10 of Embodiment 1 or the cell stack 3 of Embodiment 1, and the total volume $Va$ or the total volume $Vc$ satisfies 5 cm$^3$ or more. Therefore, in a state where the supply of electrolytes from the outside is stopped, the amount (5 cm$^3$ or more) of electrolyte capable of generating the power necessary for starting the pumps 160 and 170 can be secured by the liquid-holding portion 55 of the bipolar plate 5 and the recess or the electrode 13. In particular, when the battery cell 10 of Embodiment 1 includes an electrode 13 having a planar area $Se$ of 250 cm$^2$ or more, the electrolyte can be more reliably held by the electrode 13, and a high-output battery can be constructed.

[Use]

The RF battery 1 of Embodiment 1 can be used for a storage battery, with respect to natural energy power generation, such as solar power generation or wind power generation, for the purpose of stabilizing fluctuation of power output, storing generated power during oversupply, leveling load, or the like. Furthermore, the RF battery 1 of Embodiment 1 can be additionally placed in an ordinary power plant and used as a storage battery as countermeasures against momentary voltage drop/power failure or for the purpose of leveling load. In particular, the RF battery 1 of Embodiment 1 can be suitably used as a storage battery as a countermeasure against power failure because the RF battery can start the pumps 160 and 170 when the power is not supplied from a power system or the like to the pumps 160 and 170 due to, for example, power failure. The cell frame 2, the battery cell 10, and the cell stack 3 of Embodiment 1 can be suitably used as components of the storage battery.

[Embodiments 2 to 10]

Cell frames of Embodiments 2 to 10 will be described with reference to Figs. 5 to 13. A main difference between Embodiment 1 and Embodiments 2 to 11 lies in a groove portion 50. Hereinafter, the groove portion 50 will be mainly described, and detailed descriptions of other configurations, advantageous effects, and the like will be omitted.

[Embodiment 2]

A groove portion 50 of a bipolar plate 5A included in a cell frame of Embodiment 2 illustrated in Fig. 5 includes a plurality of independent vertical grooves 51.
Here, when the groove portion 50 includes a plurality of grooves, the groove portion 50 may include, for example, introduction grooves 5i through which an electrolyte is introduced and discharge grooves 5o which do not communicate with the introduction grooves 5i and are independent of the introduction grooves 5i and through which the electrolyte is discharged. In this embodiment, it is possible to uniformly and efficiently supply an unreacted electrolyte from the introduction grooves 5i to an electrode 13 (Fig. 1, etc.) and discharge the reacted electrolyte used in a battery reaction in the electrode 13 from the electrode 13 through the discharge grooves 5o.
The introduction grooves 5i in this example may each be a groove that has an opening at the periphery of the liquid flow region of the bipolar plate 5 and that has a groove end having a closed portion at a position apart from the opening, the groove end being disposed closer to the discharge edge than to the opening. Each of the introduction grooves 5i illustrated in Fig. 5 as an example is formed of a vertical groove 51 that extends linearly in a direction in which an electrolyte flows. The vertical groove 51 has one end portion that is opened to the supply edge forming part of the periphery of the liquid flow region, is disposed so as to extend from the opening toward the discharge edge, and has the other end portion disposed on the discharge edge side, the other end portion being closed at a position apart from the opening, that is, at a position close to the discharge edge. When the end portion of the groove functioning as the introduction groove 5i, the end portion being disposed on the discharge edge side, is located near the discharge edge as described above, the groove has a long length and has good flowability of an electrolyte. The opening of the introduction groove 5i forms an inlet of the electrolyte.
The discharge grooves 5o in this example may each be a groove that has an opening at the periphery of the liquid flow region of the bipolar plate 5 and that has a groove end having a closed portion at a position apart from the opening, the groove end being disposed closer to the supply edge than to the opening. Each of the discharge grooves 5o illustrated in Fig. 5 as an example is formed of a vertical groove 51. The vertical groove 51 has one end portion that is opened to the discharge edge forming part of the periphery of the liquid flow region, is disposed so as to extend from the opening toward the supply edge, and has the other end portion disposed on the supply edge side, the other end portion being closed at a position apart from the opening, that is, at a position close to the supply edge. When the end portion of the groove functioning as the discharge groove 5o, the end portion being disposed on the supply edge side, is located near the supply edge as described above, the groove has a long length and has good flowability of an electrolyte. The opening of the discharge groove 5o forms an outlet of the electrolyte.
Furthermore, the groove portion 50 may include a portion where the introduction grooves 5i and the discharge grooves 5o are alternately arranged. In this alternately arranged portion, grooves functioning as the introduction grooves 5i and grooves functioning as the discharge grooves 5o are arranged so as to face each other and to be interdigitated with each other (hereinafter, may be referred to as a "facing and interdigitated comb-tooth shape"). In this embodiment, the supply of the unreacted liquid and the discharge of the reacted liquid can be more uniformly and more efficiently conducted. When a plurality of introduction grooves 5i and a plurality of discharge grooves 5o are provided, some of the introduction grooves 5i and discharge grooves 5o may be alternately arranged, and the remaining introduction grooves 5i and discharge grooves 5o may be arranged such that the same type of grooves are adjacent to each other.
The bipolar plate 5 of this example includes the groove portion 50 substantially over the entire rectangular liquid flow region. The groove portion 50 of this example includes a plurality of vertical grooves 51 that are arranged in parallel at intervals in the horizontal direction, as illustrated in Fig. 5. The vertical grooves 51 function as the introduction grooves 5i and the discharge grooves 5o as described above and form a facing and interdigitated comb-tooth shape in which the introduction grooves 5i and the discharge grooves 5o are alternately arranged. The gaps between introduction grooves 5i and discharge grooves 5o that are adjacent to each other are substantially equal to each other. The vertical grooves 51 have the same shape (a rectangular planar shape and a rectangular sectional shape) and the same dimensions (groove length, groove width, and groove depth). The cell frame 2 including the bipolar plate 5 that includes a groove portion 50 including a plurality of introduction grooves 5i and a plurality of discharge grooves 5o and forming a facing and interdigitated comb-tooth shape achieves advantageous effects (a) to (d) described below. The groove portion 50 of this example includes no horizontal groove 52.

(a) A change in the flow pressure of an electrolyte is unlikely to occur in each groove portion 50 to realize good flowability of the electrolyte.
(b) The number of vertical grooves 51 is easily increased, though it depends on the groove width. Thus, flowability of the electrolyte is further enhanced.
(c) Ridge portions that separate adjacent vertical grooves 51 from each other also each have a long and narrow rectangular shape extending along the shape of the vertical groove 51 in the direction in which the electrolyte flows. The ridge portions each have a width that is substantially uniform over the entire region in the longitudinal direction thereof. Accordingly, electron transfer regions (ridge portions) can be satisfactorily secured. Furthermore, in the electrode 13, regions corresponding to the ridge portions are also provided in the direction in which the electrolyte flows. Accordingly, a wide reaction region where a battery reaction is performed can be secured in the electrode 13, and the battery reaction can be satisfactorily performed.
(d) The bipolar plate 5 has a simple shape, though it includes a plurality of vertical grooves 51 and ridge portions. Thus, the bipolar plate 5 has good productivity.

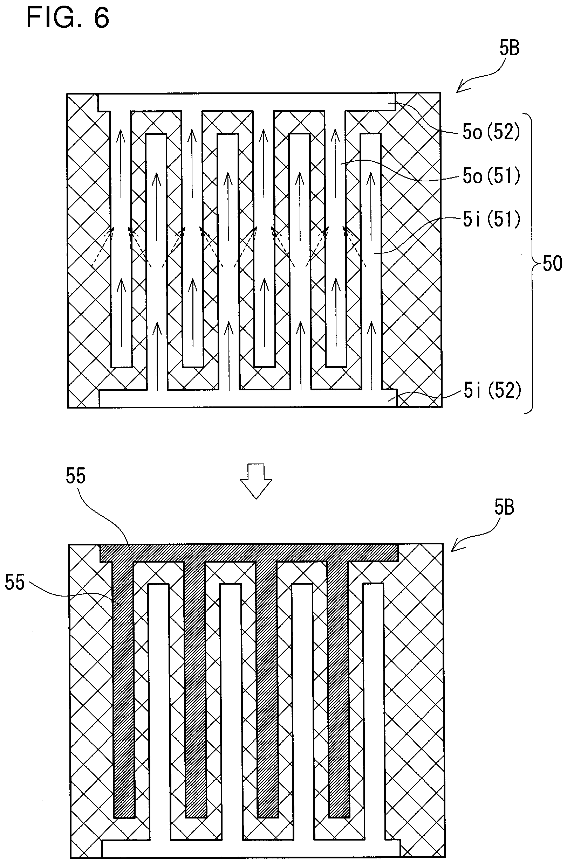

The liquid-holding portion 55 of this example includes at least part of the discharge grooves 5o. As described above, each of the discharge grooves 5o has a portion which is disposed closer to the supply edge than to the opening and whose end located on the supply edge side is closed. Specifically, the groove end located at a lower portion in the gravitational direction has the closed portion. The whole of the closed portion can hold an electrolyte and forms the liquid-holding portion 55. In this example, the whole of each of the vertical grooves 51 functioning as the discharge grooves 5o forms the liquid-holding portion 55 (refer to the lower drawing in Fig. 5). When the introduction grooves 5i and the discharge grooves 5o are provided, at least part of the discharge grooves 5o (Figs. 8 and 9) or the whole of the discharge grooves 5o (for example, Fig. 5 (the present example), Fig. 6, etc.) in some groove shapes can form the liquid-holding portion 55. Alternatively, the liquid-holding portion 55 may include part of the introduction grooves 5i (for example, Fig. 9).

In the cell frame of Embodiment 2 including the bipolar plate 5A described above, the whole of the discharge grooves 5o forms the liquid-holding portion 55 and easily holds an electrolyte when the supply of the electrolyte from the outside is stopped. Accordingly, an RF battery including the cell frame of Embodiment 2 can more reliably start pumps during, for example, power failure in a power system (also refer to Test Example 1 described below).

[Embodiment 3]

A groove portion 50 of a bipolar plate 5B included in a cell frame of Embodiment 3 illustrated in Fig. 6 includes a plurality of vertical grooves 51 and includes a portion where an introduction groove 5i and a discharge groove 5o form a facing and interdigitated comb-tooth shape, as in Embodiment 2. Furthermore, the groove portion 50 includes horizontal grooves 52 extending in a direction (the left-right direction in Fig. 6) orthogonal to a direction in which an electrolyte flows.

More specifically, the groove portion 50 of the bipolar plate 5B includes a horizontal groove 52 that is disposed along the supply edge, is opened to the supply edge, and forms part of the introduction groove 5i, and a horizontal groove 52 that is disposed along the discharge edge, is opened to the discharge edge, and forms part of the discharge groove 5o. One end portion of each of the vertical grooves 51 is opened to the horizontal groove 52. That is, the plurality of vertical grooves 51 forming the remaining part of the introduction groove 5i extend from the horizontal groove 52 forming the part of the introduction groove 5i. The plurality of vertical grooves 51 forming the remaining part of the discharge groove 5o extend from the horizontal groove 52 forming the part of the discharge groove 5o. Accordingly, each of the introduction groove 5i and the discharge groove 5o of the groove portion 50 includes vertical grooves 51 and a horizontal groove 52.

In the cell frame of Embodiment 3 including the bipolar plate 5B described above, the whole of the discharge groove 5o forms a liquid-holding portion 55 as in the cell frame of Embodiment 2. Furthermore, the liquid-holding portion 55 includes the horizontal groove 52. Since the horizontal groove 52 is disposed so as to be orthogonal to the gravitational direction, the horizontal groove 52 easily functions as a portion from which an electrolyte is unlikely to fall out due to its own weight compared with the vertical grooves 51, which extend in the gravitational direction. Therefore, this liquid-holding portion 55 more easily held an electrolyte when the supply of the electrolyte from the outside is stopped. Accordingly, an RF battery including the cell frame of Embodiment 3 is expected to more reliably start pumps during, for example, power failure in a power system.

In addition, the horizontal grooves 52 in the bipolar plate 5B can be used as rectifying grooves. Thus, an electrolyte is easily uniformly introduced into or discharged from the bipolar plate 5B and the electrode 13 (Fig. 1, etc.) in the horizontal direction.

[Embodiment 4]

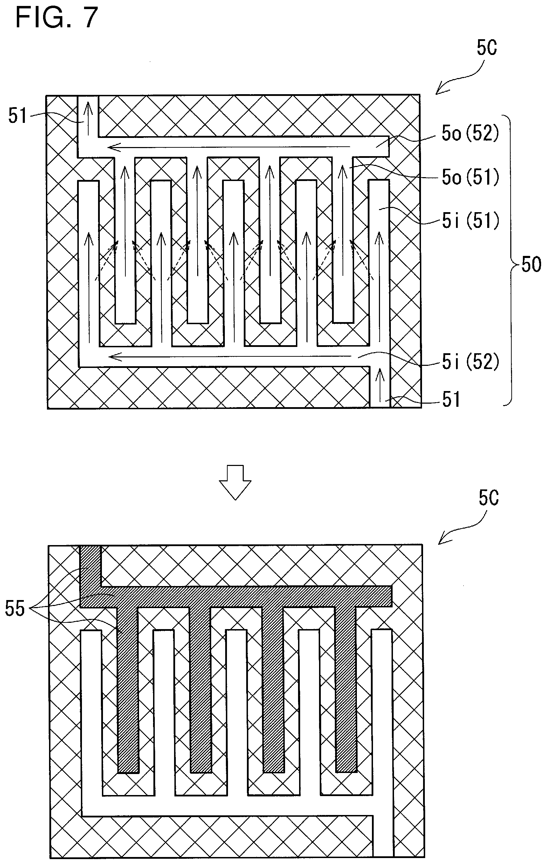

A groove portion 50 of a bipolar plate 5C included in a cell frame of Embodiment 4 illustrated in Fig. 7 includes an introduction groove 5i and a discharge groove 5o each of which includes vertical grooves 51 and a horizontal groove 52 as in Embodiment 3 described above. However, in the groove portion 50 of the bipolar plate 5C, the horizontal grooves 52 are not opened to the supply edge or the discharge edge but separately include grooves (short grooves 51 described below) that are opened to the supply edge or the discharge edge,

Specifically, the introduction groove 5i includes a plurality of vertical grooves 51 extending from a horizontal groove 52 toward the discharge edge and forming a facing and interdigitated comb-tooth shape and one relatively short vertical groove 51 extending from the horizontal groove 52 toward the supply edge. This short vertical groove 51 forms a portion through which an electrolyte is collectively introduced into the horizontal groove 52 functioning as a rectifying groove. The discharge groove 5o includes a plurality of vertical grooves 51 extending from a horizontal groove 52 toward the supply edge and forming the facing and interdigitated comb-tooth shape and one relatively short vertical groove 51 extending from the horizontal groove 52 toward the discharge edge. This short vertical groove 51 functions as a portion through which an electrolyte is collected and discharged to the horizontal groove 52 functioning as a rectifying groove.

In the cell frame of Embodiment 4 including the bipolar plate 5C described above, the whole of the discharge groove 5o forms a liquid-holding portion 55 as in the cell frame of Embodiment 2. Since the liquid-holding portion 55 includes the horizontal groove 52 as in Embodiment 3, an RF battery including the cell frame of Embodiment 4 is expected to more reliably start pumps during, for example, power failure in a power system.

[Embodiment 5]

A groove portion 50 of a bipolar plate 5D included in a cell frame of Embodiment 5 illustrated in Fig. 8 includes an introduction groove 5i and a discharge groove 5o each of which includes vertical grooves 51 and horizontal grooves 52 as in Embodiment 3 described above. However, in the groove portion 50 of the bipolar plate 5D, the horizontal grooves 52 are not opened to the supply edge or the discharge edge but are opened to side edges of the liquid flow region. The groove portion 50 includes a plurality of relatively short horizontal grooves 52 (hereinafter, may be referred to as "step grooves 52") extending from corresponding vertical grooves 51.

Specifically, except for vertical grooves 51 disposed on both ends of the bipolar plate 5D in the horizontal direction, the plurality of vertical grooves 51 each include a plurality of step grooves 52 projecting to the left in the horizontal direction and to the right in the horizontal direction, the step grooves 52 being arranged at intervals in the vertical direction. The vertical grooves 51 located on both ends of the bipolar plate 5D in the horizontal direction each include the step grooves 52 only on the side far from the side edge of the liquid flow region. The step grooves 52 on the left of the vertical groove 51 and the step grooves 52 on the right are disposed so as to be shifted from one another in the vertical direction. Therefore, the step grooves 52 are provided such that, in adjacent vertical grooves 51, a step groove 52 extending from one vertical groove 51 is disposed between step grooves 52 that extend from the other vertical groove 51 and that are arranged in parallel in the vertical direction.

In the cell frame of Embodiment 5 including the bipolar plate 5D described above, the discharge groove 5o excluding the horizontal groove 52 which is opened to the side edge, that is, the vertical grooves 51 and the step grooves 52 form a liquid-holding portion 55. Since the liquid-holding portion 55 includes the step grooves 52, an RF battery including the cell frame of Embodiment 5 is expected to more reliably start pumps during, for example, power failure in a power system.

Furthermore, in the bipolar plate 5D, the step grooves 52 of the introduction groove 5i and the step grooves 52 of the discharge groove 5o form a facing and interdigitated comb-tooth shape. Since the bipolar plate 5D has facing and interdigitated comb-tooth shapes formed by the vertical grooves 51 and by the horizontal grooves 52 (step grooves 52), an electrolyte is easily spread over the entire liquid flow region. Accordingly, for the electrode 13 (Fig. 1, etc.), the supply of an unreacted liquid and the discharge of the reacted liquid can be more uniformly and more efficiently conducted.

[Embodiment 6]

A groove portion 50 of a bipolar plate 5E included in a cell frame of Embodiment 6 illustrated in Fig. 9 differs from the groove portion 50 of the bipolar plate 5D included in the cell frame of Embodiment 5 in the shape of ends of step grooves 52. Specifically, each of the step grooves 52 includes a relatively short vertical groove 51 (hereinafter, may be referred to as a "return groove 51") extending from an end thereof. The step groove 52 and the return groove 51 are arranged in an L shape.

In this example, a return groove 51 extending upward in the vertical direction is provided so as to be connected to a step groove 52 extending to the left side of a vertical groove 51 in the horizontal direction. A return groove 51 extending downward in the vertical direction is provided so as to be connected to a step groove 52 extending to the right side of a vertical groove 51 in the horizontal direction.

In the cell frame of Embodiment 6 including the bipolar plate 5E described above, the discharge groove 5o excluding the horizontal groove 52 which is opened to the side edge, that is, the vertical grooves 51, the step grooves 52, and the return grooves 51 form a liquid-holding portion 55. In the introduction groove 5i, return grooves 51 extending downward also form the liquid-holding portion 55. Furthermore, in the discharge groove 5o, a vertical groove 51, a step groove 52, and a return groove 51 extending upward are arranged in a J shape, and this J-shaped portion is a portion from which an electrolyte is unlikely to fall out. The liquid-holding portion 55 includes not only the step grooves 52 but also the portion from which an electrolyte is unlikely to fall out, as described above. Accordingly, an RF battery including the cell frame of Embodiment 6 is expected to still more reliably start pumps during, for example, power failure in a power system. Furthermore, in the cell frame of Embodiment 6, part of the introduction groove 5i also functions as the liquid-holding portion 55, and thus, in some cases, the amount of electrolyte held by the liquid-holding portion 55 can be made larger than that in Embodiment 5.

In addition, the bipolar plate 5E includes the return grooves 51 in addition to the step grooves 52, and return grooves 51 extending upward and return grooves 51 extending downward are arranged at diagonal positions. Therefore, an electrolyte is spread over the entire liquid flow region of the bipolar plate 5E more easily than Embodiment 5. Accordingly, for the electrode 13 (Fig. 1, etc.), the supply of an unreacted liquid and the discharge of the reacted liquid can be more uniformly and more efficiently conducted.

[Embodiment 7]

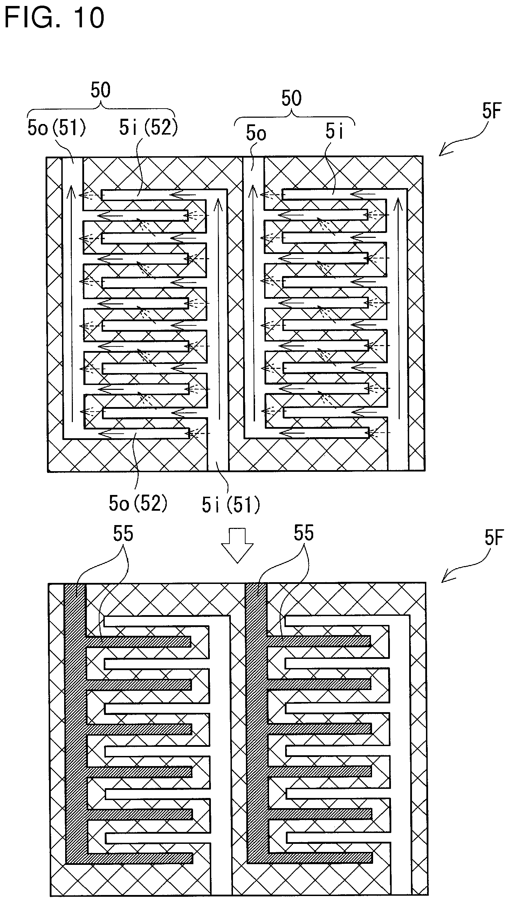

A groove portion 50 of a bipolar plate 5F included in a cell frame of Embodiment 7 illustrated in Fig. 10 includes introduction grooves 5i and discharge grooves 5o each including a vertical groove 51 and horizontal grooves 52, and has portions that form a facing and interdigitated comb-tooth shape. However, in the groove portions 50 of the bipolar plate 5F, a plurality of horizontal grooves 52 form the facing and interdigitated comb-tooth shape. The bipolar plate 5F includes a plurality of pairs of such portions that form a facing and interdigitated comb-tooth shape, the portions being arranged in the horizontal direction (Fig. 10 illustrates two pairs as an example).

Specifically, one introduction groove 5i includes a vertical groove 51 opened to the supply edge and a plurality of horizontal grooves 52 extending from the vertical groove 51 to the left in the horizontal direction and arranged at intervals in the vertical direction. One discharge groove 5o includes a vertical groove 51 opened to the discharge edge and a plurality of horizontal grooves 52 extending from the vertical groove 51 to the right in the horizontal direction and arranged at intervals in the vertical direction. The horizontal grooves 52 forming the introduction groove 5i and the horizontal grooves 52 forming the discharge groove 5o are alternately arranged.

In the cell frame of Embodiment 7 including the bipolar plate 5F described above, the whole of each of the discharge grooves 5o forms a liquid-holding portion 55 as in the cell frame of Embodiment 2. Since the liquid-holding portion 55 includes the horizontal grooves 52 as in Embodiment 3, an RF battery including the cell frame of Embodiment 7 is expected to more reliably start pumps during, for example, power failure in a power system.

Furthermore, since the bipolar plate 5F includes a plurality of pairs of portions that form a facing and interdigitated comb-tooth shape, an electrolyte is easily spread over the entire liquid flow region of the bipolar plate 5F. Accordingly, for the electrode 13 (Fig. 1, etc.), the supply of an unreacted liquid and the discharge of the reacted liquid can be more uniformly and more efficiently conducted.

[Embodiment 8]

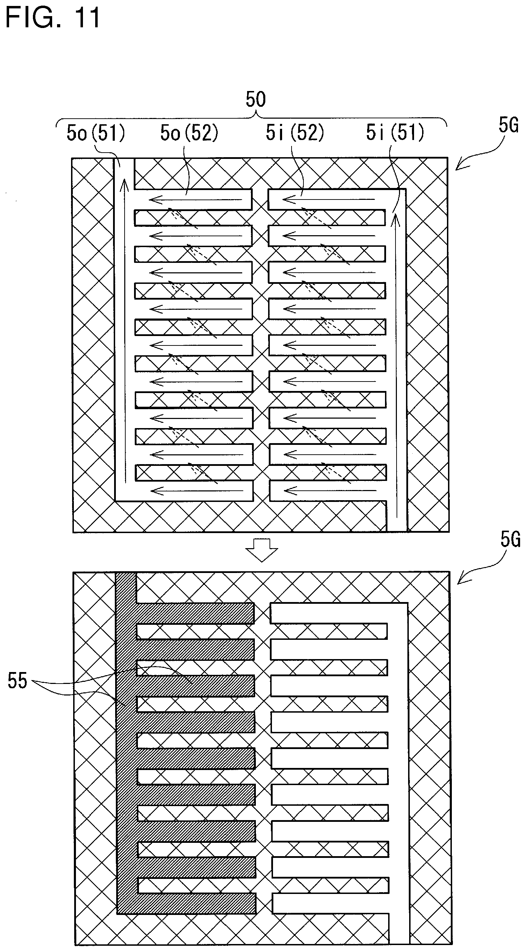

A groove portion 50 of a bipolar plate 5G included in a cell frame of Embodiment 8 illustrated in Fig. 11 includes an introduction groove 5i and a discharge groove 5o each including a vertical groove 51 and horizontal grooves 52. The introduction groove 5i and the discharge groove 5o each include a vertical groove 51 that is opened to the supply edge or the discharge edge and a plurality of horizontal grooves 52 extending from the vertical groove 51 as in Embodiment 7. However, the groove portion 50 of the bipolar plate 5G does not form a facing and interdigitated comb-tooth shape. The horizontal grooves 52 forming the introduction groove 5i and the corresponding horizontal grooves 52 forming the discharge groove 5o are disposed at the same position in the vertical direction and face each other without interdigitation.

In the cell frame of Embodiment 8 including the bipolar plate 5G described above, the whole of the discharge groove 5o forms a liquid-holding portion 55 as in the cell frame of Embodiment 2. Since the liquid-holding portion 55 includes the horizontal grooves 52 as in Embodiment 3, an RF battery including the cell frame of Embodiment 8 is expected to more reliably start pumps during, for example, power failure in a power system.

[Embodiment 9]

A groove portion 50 of a bipolar plate 5H included in a cell frame of Embodiment 9 illustrated in Fig. 12 includes an introduction groove 5i and a discharge groove 5o each including vertical grooves 51 and a horizontal groove 52 and further includes isolated grooves 53 that are not opened to the periphery of the liquid flow region of the bipolar plate 5H. In short, in the groove portion 50 (Fig. 7) of the bipolar plate 5C included in the cell frame of Embodiment 4, each of the vertical grooves 51 forming a facing and interdigitated comb-tooth shape is divided into short grooves in the vertical direction, and the short grooves are arranged at intervals in the vertical direction. The short grooves function as the isolated grooves 53.

Specifically, the introduction groove 5i includes a plurality of relatively short vertical grooves 51 extending from a horizontal groove 52 toward the discharge edge and one vertical groove 51 extending from the horizontal groove 52 toward the supply edge and forming the introduction portion. The discharge groove 5o includes a plurality of relatively short vertical grooves 51 extending from a horizontal groove 52 toward the supply edge and one vertical groove 51 extending from the horizontal groove 52 toward the discharge edge and forming the discharge portion. A plurality of isolated grooves 53 are arranged in a line so as to extend from each of the ends of the relatively short vertical grooves 51 in the introduction groove 5i and the discharge groove 5o.

In the cell frame of Embodiment 9 including the bipolar plate 5H described above, the whole of the discharge groove 5o forms a liquid-holding portion 55 as in the cell frame of Embodiment 2. Furthermore, the isolated grooves 53 form the liquid-holding portion 55. Since the isolated grooves 53 are not opened to the periphery of the liquid flow region of the bipolar plate 5H, the isolated grooves 53 are portions from which an electrolyte is unlikely to fall out due to its own weight compared with the vertical grooves 51 and the horizontal groove 52. Therefore, this liquid-holding portion 55 more easily held an electrolyte when the supply of the electrolyte from the outside is stopped. Accordingly, an RF battery including the cell frame of Embodiment 9 is expected to more reliably start pumps during, for example, power failure in a power system.

Here, a description is made of, as an example, a case where the isolated grooves 53 have the same shape and the same dimensions, and the isolated grooves 53 each have a rectangular planar shape. However, the shape and the dimensions of the isolated grooves 53 can be changed as required. This point also applies to Embodiment 10 described below. Here, a case where a plurality of isolated grooves 53 are arranged in a line is described as an example. However, the arrangement state can also be changed as required.

[Embodiment 10]

A groove portion 50 of a bipolar plate 5I included in a cell frame of Embodiment 10 illustrated in Fig. 13 includes a plurality of vertical grooves 51 and includes a portion (not shown) where an introduction groove 5i and a discharge groove 5o form a facing and interdigitated comb-tooth shape, as in Embodiment 2. Furthermore, the groove portion 50 includes an isolated groove 53 formed of a vertical groove 51 between a vertical groove 51 forming an introduction groove 5i and a vertical groove 51 forming a discharge groove 5o. Figure 13 illustrates, as a representative example, only one groove group in which the introduction groove 5i, the isolated groove 53, and the discharge groove 5o are sequentially arranged from the right. However, the groove group may be repeatedly arranged in the horizontal direction.

One end portion of the isolated groove 53 of this example is arranged at a position higher than (on the discharge edge side of) the lower end (supply edge) of the adjacent introduction groove 5i and lower than (on the supply edge side of) the lower end of the adjacent discharge groove 5o. The other end portion of the isolated groove 53 is arranged at a position higher than the upper end of the adjacent introduction groove 5i and lower than the upper end (discharge edge) of the adjacent discharge groove 5o. Therefore, the two end portions of the isolated groove 53 and regions near the two end portions are not arranged between the adjacent introduction groove 5i and discharge groove 5o, and the intermediate portion of the isolated groove 53 is arranged between the adjacent introduction groove 5i and discharge groove 5o. Each of the two end portions of the isolated groove 53 is closed.

In the cell frame of Embodiment 10 including the bipolar plate 5I described above, the whole of the discharge groove 5o forms a liquid-holding portion 55 as in the cell frame of Embodiment 2. Furthermore, the isolated groove 53 forms the liquid-holding portion 55. Since this liquid-holding portion 55 includes the isolated groove 53 as in Embodiment 9, the liquid-holding portion 55 more easily held an electrolyte when the supply of the electrolyte from the outside is stopped. Accordingly, an RF battery including the cell frame of Embodiment 10 is expected to more reliably start pumps during, for example, power failure in a power system.

[Test Example 1]

The starting state of pumps by RF batteries was examined by using RF batteries including, as components, cell frames including bipolar plates provided with groove portions. Test conditions will be described below.

In this test, RF batteries having the same configuration except for the specification of the groove portions of the bipolar plates are prepared. The RF batteries each include a cell stack including a plurality of battery cells. Regarding the cell frames, a pair of single-sided groove frames each having a groove portion described below only on one of the front surface and the back surface of a bipolar plate is prepared, and a plurality of double-sided groove frames each having a groove portion described below on each of the front surface and the back surface of a bipolar plate are prepared. The cell stack includes the single-sided groove frames at the end positions in a direction in which the battery cells are stacked and the double-sided groove frames at the intermediate positions. The groove portion of each of the bipolar plates includes a plurality of grooves. The groove width and the groove depth of each of the grooves are uniform in the longitudinal direction of the groove.

<Test conditions>

«Electrode»

Planar shape: Square having a side of 17.0 cm
Thickness: 0.01 cm
Planar area $S_e$: 289 cm$^2$ (> 250 cm$^2$)
Volume $V_e$: 2.89 cm$^3$

<<Cell frame>>

Planar shape of liquid flow region of bipolar plate: Square having a side of 17.0 cm
Thickness of bipolar plate: 0.12 cm
Planar area $S_f$ of opening of frame body: 289 cm$^2$ (> 250 cm$^2$)
Volume $V_f$ of recess formed by bipolar plate and inner wall of frame body: 2.89 cm$^3$

<Groove portion>

Basic shape of groove: A plurality of vertical grooves extending from the supply edge or the discharge edge of the liquid flow region in a direction in which an electrolyte flows
Groove length of one vertical groove: 15 cm
Groove width of one vertical groove: 0.1 cm
Groove depth of one vertical groove: 0.05 cm
Groove volume of one vertical groove: 0.075 cm$^3$
Groove sectional shape of one vertical groove: Rectangle
Arrangement form of grooves: Facing and interdigitated comb-tooth shape (refer to Fig. 5) including introduction grooves formed of vertical grooves and discharge grooves formed of vertical grooves

<Arrangement and dimensions of grooves>

Sample No. 1 Gap between adjacent discharge grooves: 0.7 cm (= 7 mm)

The number of discharge grooves: 24 The number of introduction grooves: 24
Total volume of discharge grooves: 1.8 cm$^3$

Sample No. 2 Gap between adjacent discharge grooves: 0.5 cm (= 5 mm)

The number of discharge grooves: 32 The number of introduction grooves: 32
Total volume of discharge grooves: 2.4 cm$^3$
Ratio of total planar area of discharge grooves to total planar area of groove portion: 50%

<<Total volume of electrode or recess and discharge grooves>>

Sample No. 1: 4.69 cm³ (< 5 cm³)
Sample No. 2: 5.29 cm³ (≥ 5 cm³)

<<Ratio of total volume of discharge grooves to total volume of electrode or recess and discharge grooves>>

Sample No. 1: 38.4% (≈ (1.8/4.69) × 100)
Sample No. 2: 45.4% (≈ (2.4/5.29) × 100)

The term "gap between adjacent discharge grooves" refers to the distance between the centers of vertical grooves forming discharge grooves. Typically, one vertical groove forming an introduction groove is disposed between adjacent discharge grooves.

The minimum distance between a discharge groove and an introduction groove that are adjacent to each other (the distance between side edges of the peripheries of the grooves, the side edges being arranged close to each other) is 2.5 mm in sample No. 1 and is 1.5 mm in sample No. 2.

Here, the discharge grooves correspond to the liquid-holding portion described above.

Cell stacks each having a number of cells of 240 are prepared by using the electrodes and the cell frames that satisfy the test conditions described above. An electrolyte is supplied to each of the RF batteries that include the cell stacks including the samples by using a pump to store the electrolyte in the RF battery, and the supply of the power (hereinafter, referred to as an "external power") to the pump is then stopped. The pump is electrically connected to the RF battery (cell stack) so as to be driven by the power from the RF battery.

The electrolyte is an aqueous solution of vanadium sulfate (V concentration: 1.7 mol/L, sulfuric acid concentration: 4.3 mol/L) having an SOC (state of charge, also referred to as a "charging depth") of 50%.

The pump is a commercially available electric pump having a rated capacity of 0.6 kW.

Whether or not the pump could be started within 5 minutes after the stop of the external power to the pump was examined. According to the results, the RF battery including sample No. 1 could not be started, whereas the RF battery including sample No. 2 could be started. These results showed that an RF battery having a total volume $V_c$ or $V_a$ of 5 cm³ or more, the total volume $V_c$ or $V_a$ being a total volume of the volume $V_e$ of the electrode or the volume $V_f$ of the recess of the cell frame and the total volume $V_s$ of the discharge grooves, could start the pump when the external power to the pump was stopped. Referring to this test, even when the external power to the pump is stopped, the pump can be started with the RF battery by itself by adjusting at least one of the volume $V_e$ of the electrode or the volume $V_f$ of the recess of the cell frame and the total volume $V_s$ of the portion (the discharge grooves in this test) capable of holding the electrolyte in the groove portion such that the total volume $V_a$ or $V_c$ is 5 cm³ or more.

[Consideration]

Hereinafter, a consideration will be made of an amount V (liter) of electrolyte with which an RF battery can start a pump by itself when an external power to the pump is stopped.

The flow rate of a pump is represented by Q, the pressure loss due to passing of an electrolyte to a RF battery is represented by $\Delta P$, the pump efficiency is represented by $\eta p$, the time necessary for passing an electrolyte in an amount V at a flow rate Q is represented by t, the molar concentration of active material ions of an electrolyte is represented by $n_0$, the Faraday constant is represented by F (= 96,500 C/mol), the electromotive force of an RF battery is represented by E, the SOC that can be discharged in an electrolyte is represented by $\chi$, the volume of an electrolyte necessary for starting a pump when an external power to the pump is stopped is represented by $V_x$, and the battery efficiency is represented by $\eta c$.

In order to start a pump with an RF battery by itself when an external power to the pump is stopped, it is necessary to satisfy a formula 1 below considering energy possessed by an electrolyte.

$$<\text{Formula 1}> \quad ((\Delta P \times Q)/\eta p) \times t \leq ((n_0 \times F \times E \times \chi \times V_x)/\sqrt{\eta c}$$

For example, with reference to the operating conditions of a vanadium-based RF battery and the like, the molar

concentration $n_0$ is assumed to be 1.7 mol/L, the electromotive force E is assumed to be 1.4 V, the SOC $\chi$ is assumed to be 0.5, and the battery efficiency $\eta c$ is assumed to be 0.8. The pump efficiency $\eta p$ is assumed to be 0.3 on the basis of a performance curve of a pump that is used in a typical RF battery. By substituting these values into the formula 1, the following is provided.

$$<\text{Formula 2}> \quad (\Delta P \times Q \times t)/38517 \ (\text{J/liter}) \leq V$$

With reference to the operating conditions and the like, the minimum of the flow rate Q is assumed to be 1 liter/min, the minimum of the time t is assumed to be 2 minutes, and the minimum of the pressure loss $\Delta P$ is assumed to be 95 kPa on the basis of an actual measured value or the like. By substituting these values into the formula 2, the following is provided.

$$(95 \times 1 \times 2)/38517 \approx 0.005 \ (\text{liter}) = 5\text{cm}^3 \leq V$$

This consideration also shows that when the total volume of the volume Ve of the electrode or the volume Vf of the recess and the total volume Vs of the liquid-holding portion of the bipolar plate is 5 cm³ or more, an RF battery can hold an electrolyte in an amount corresponding to this total volume. Consequently, it is supported that the RF battery can start a pump by itself when an external power to the pump is stopped.

[Modifications]

Regarding the cell frame 2 of any of the embodiments and the cell frame 2 included in the battery cell 10, the cell stack 3, or the RF battery 1 of any of the embodiments, at least one of changes described below can be made.

(1) The planar shape of the liquid flow region (frame body 22) of the bipolar plate 5 is changed. Examples thereof include an ellipse, a racetrack shape, and polygonal shapes such as a hexagon and an octagon.

(2) The planar shape of a groove is changed. Examples thereof include a shape of a groove that has partially different widths and that locally has a thick portion and a thin portion, and a curved shape such as a wavy line shape. Examples thereof further include a tapered shape in which the width of the vertical groove 51 or the horizontal groove 52 decreases from one end portion toward the other end portion.

(3) The sectional shape of a groove is changed. Examples thereof include a semi-circular arc shape, a V shape, a U shape, and a dovetail groove shape in which the width of an opening of a groove is smaller than the width of a bottom surface of the groove.

The present invention is not limited to the examples described above but is defined by the appended claims. The present invention is intended to cover all the modifications within the meaning and scope equivalent to those of the claims.

Reference Signs List

1 redox flow battery (RF battery)
  10 battery cell
  11 membrane
  13 electrode
  14 positive electrode
  15 negative electrode
  16 positive electrolyte tank
  17 negative electrolyte tank
  160, 170 pump
  162, 164, 172, 174 pipe
  18 sealing member

2 cell frame
5, 5A to 5I bipolar plate
50 groove portion
51 vertical groove (return groove)
52 horizontal groove (step groove)
53 isolated groove
55 liquid-holding portion
5i introduction groove
5o discharge groove
22 frame body
220 inner wall
24, 25 liquid supply manifold
26, 27 liquid discharge manifold
28, 29 slit
3 cell stack
32 end plate
33 joining member


**Claims**

1. A cell frame comprising a bipolar plate and a frame body provided on an outer periphery of the bipolar plate,
   wherein the bipolar plate includes, in a surface thereof, a groove portion through which an electrolyte supplied from an outside of the cell frame flows,
   the groove portion includes a liquid-holding portion that holds the electrolyte when the supply of the electrolyte from the outside is stopped,
   the frame body has an opening having a planar area of 250 cm$^2$ or more, and
   a total volume of a volume of a recess formed by the bipolar plate and an inner wall of the frame body and a total volume of the liquid-holding portion is 5 cm$^3$ or more.

2. The cell frame according to Claim 1, wherein a ratio of the total volume of the liquid-holding portion to the total volume of the volume of the recess and the total volume of the liquid-holding portion is 5% or more.

3. A battery cell comprising the cell frame according to Claim 1 or 2.

4. A battery cell comprising an electrode and a cell frame that includes a bipolar plate on which the electrode is disposed and a frame body provided on an outer periphery of the bipolar plate,
   wherein the bipolar plate includes, in a surface thereof, a groove portion through which an electrolyte supplied from an outside of the battery cell flows,
   the groove portion includes a liquid-holding portion that holds the electrolyte when the supply of the electrolyte from the outside is stopped,
   the electrode has a planar area of 250 cm$^2$ or more, and
   a total volume of a volume of the electrode and a total volume of the liquid-holding portion is 5 cm$^3$ or more.

5. The battery cell according to Claim 4, wherein a ratio of the total volume of the liquid-holding portion to the total volume of the volume of the electrode and the total volume of the liquid-holding portion is 5% or more.

6. The battery cell according to any one of Claims 3 to 5, wherein the groove portion includes a portion where introduction grooves and discharge grooves are alternately arranged, the introduction grooves being grooves through which an electrolyte is introduced, the discharge grooves being grooves which do not communicate with the introduction grooves and are independent of the introduction grooves and through which the electrolyte is discharged, and the liquid-holding portion includes at least part of the discharge grooves.

7. A cell stack comprising a plurality of battery cells, wherein each of the battery cells is the battery cell according to any one of Claims 3 to 6.

8. A redox flow battery comprising the battery cell according to any one of Claims 3 to 6 or the cell stack according to Claim 7.

FIG. 1

## FIG. 2

## FIG. 3

EP 3 751 656 A1

# FIG. 4

# FIG. 5

5A

5o (51)

5i (51)

50

5A

55

FIG. 6

# FIG. 7

FIG. 8

# FIG. 9

# FIG. 10

FIG. 11

# FIG. 12

# FIG. 13

## INTERNATIONAL SEARCH REPORT

| | International application No. |
|---|---|
| | PCT/JP2018/003736 |

**A. CLASSIFICATION OF SUBJECT MATTER**
Int.Cl. H01M8/18(2006.01)i, H01M8/0263(2016.01)i, H01M8/0273(2016.01)i

According to International Patent Classification (IPC) or to both national classification and IPC

**B. FIELDS SEARCHED**

Minimum documentation searched (classification system followed by classification symbols)
Int.Cl. H01M8/18, H01M8/0263, H01M8/0273

Documentation searched other than minimum documentation to the extent that such documents are included in the fields searched
Published examined utility model applications of Japan    1922-1996
Published unexamined utility model applications of Japan    1971-2018
Registered utility model specifications of Japan    1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-216077 A (SUMITOMO ELECTRIC INDUSTRIES, LTD.) 07 December 2017, paragraphs [0076], [0077], fig. 1, 5, 6 & JP 6108008 B1 | 1-8 |
| X | JP 2015-122231 A (SUMITOMO ELECTRIC INDUSTRIES, LTD) 02 July 2015, paragraphs [0074], [0075], fig. 1, 9, 10 (Family: none) | 1-8 |

☒ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15.03.2018 | 27.03.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2018/003736

| C (Continuation). | DOCUMENTS CONSIDERED TO BE RELEVANT | |
|---|---|---|
| Category* | Citation of document, with indication, where appropriate, of the relevant passages | Relevant to claim No. |
| A | JP 2003-157885 A (SUMITOMO ELECTRIC INDUSTRIES, LTD) 30 May 2003 (Family: none) | 1-8 |
| A | JP 2017-157302 A (SUMITOMO ELECTRIC INDUSTRIES, LTD) 07 September 2017 & WO 2017/150170 A1 | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015122230 A